(19) Europäisches Patentamt
European Patent Office
Office européen des brevets

(11) EP 0 819 717 B1

(12) EUROPEAN PATENT SPECIFICATION

(45) Date of publication and mention of the grant of the patent:
**12.07.2006 Bulletin 2006/28**

(21) Application number: **96908343.5**

(22) Date of filing: **04.04.1996**

(51) Int Cl.:
***C08G 64/20*** (2006.01) ***C08G 64/30*** (2006.01)

(86) International application number:
**PCT/JP1996/000925**

(87) International publication number:
**WO 1996/031553 (10.10.1996 Gazette 1996/45)**

(54) **PROCESS AND APPARATUS FOR PREPARING POLYCARBONATE AND METHOD FOR SURFACE TREATMENT OF SAID APPARATUS**

VERFAHREN UND VORRICHTUNG ZUR HERSTELLUNG VON POLYCARBONAT UND VERFAHREN ZUR OBERFLÄCHENBEHANDLUNG DIESER VORRICHTUNG

PROCEDE ET APPAREIL POUR PREPARER DU POLYCARBONATE ET METHODE DE TRAITEMENT DE SURFACE DUDIT APPAREIL

(84) Designated Contracting States:
**BE DE ES**

(30) Priority: **06.04.1995 JP 8096495**
**11.07.1995 JP 17500895**

(43) Date of publication of application:
**21.01.1998 Bulletin 1998/04**

(73) Proprietor: **IDEMITSU KOSAN COMPANY LIMITED**
**Tokyo 100-0005 (JP)**

(72) Inventors:
- **ISHIKAWA, Yasuhiro**
**Sodegaura-shi**
**Chiba-ken 299-02 (JP)**
- **SHIBUYA, Tadao**
**Sodegaura-shi**
**Chiba-ken 299-02 (JP)**
- **NAKAE, Mitsugu**
**Sodegaura-shi**
**Chiba-ken 299-02 (JP)**

(74) Representative: **Gille Hrabal Struck Neidlein Prop Roos**
**Patentanwälte**
**Brucknerstrasse 20**
**40593 Düsseldorf (DE)**

(56) References cited:
**EP-A- 0 512 223**
**EP-A- 0 635 532**
**JP-A- 4 332 725**
**JP-A- 6 056 984**
**JP-A- 6 200 008**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 819 717 B1

## Description

### TECHNICAL FIELD

The present invention relates to a process for producing a polycarbonate, an apparatus for producing a polycarbonate, and a process for treating the surface of the apparatus. More particularly, the present invention relates to an industrially advantageous process for producing a polycarbonate by transesterification which efficiently produces a high molecular weight polycarbonate having an excellent color tone using an inexpensive reactor made of stainless steel; an apparatus for producing a polycarbonate which is used in this process; and a process for treating the surface of an apparatus to obtain this apparatus.

### BACKGROUND ART

Polycarbonates are engineering plastics having excellent transparency, heat resistance, and impact resistance and currently used in a wide area including electric and electronic products, automobiles, optical parts, and other industrial products.
As the process for producing a polycarbonate, a process in which an aromatic dihydroxy compound is directly brought into reaction with phosgen (the interfacial polycondensation) and a process in which an aromatic dihydroxy compound and a diester of carbonic acid are brought into transesterification in a melt state (the melt polymerization) have been known.
Among the above processes for producing a polycarbonate, the interfacial polycondensation has problems in (i) that toxic phosgen must be used, (ii) that an apparatus for production is corroded by compounds containing chlorine, such as hydrogen chloride and sodium chloride, which are formed as byproducts, and (iii) that separation of impurities, such as sodium chloride, which are mixed into the obtained resin and adversely affect physical properties of the polymer is difficult.
To solve the problems of the interfacial polycondensation, the melt polymerization which does not use phosgen but utilizes the transesterification of a dihydroxy compound and a diester of carbonic acid can be conducted.
When a polycarbonate is produced by transesterification in accordance with the melt polymerization, a problem arises in that the obtained polymer tends to be colored because the transesterification is conducted at a high temperature for a long time. It is known that using an inert material as the material of a reactor is effective for suppressing the coloring. For example, a process in which nickel, tantalum, chromium, or an alloy of these metals is used as the material of a reactor (United States Patent No. 4,383,902) and a process in which a material containing 20 % by weight or less of iron is used as the material of a reactor (Japanese Patent Application Laid-Open No. Heisei 4(1992)-88,017) are proposed.
However, the apparatuses made of the above materials are expensive, and the cost of the obtained polycarbonate is inevitably high. Therefore, development of a process conducted in an apparatus made of an inexpensive material has been desired.
When a polycarbonate is produced by transesterification in an apparatus made of stainless steel as the inexpensive material, problems arise in that the obtained polycarbonate is generally colored, and that obtaining a high molecular weight polycarbonate is difficult. For solving these problems, a process in which the surface of a reactor is polished by buffing to obtain a smooth surface (Japanese Patent Application Laid-Open No. Heisei 4(1992)-7,328), a process in which the surface of a reactor is washed with an acid to remove scales attached to the surface and also to form a passive state on the surface (Japanese Patent Application Laid-Open No. Heisei 4(1992)-7,329), a process in which the roughness $R_{max}$ of the surface of pipings made of stainless steel through which the reactants pass is adjusted to 5 μm or less (Japanese Patent Application Laid-Open No. Heisei 6(1994)-136,111), and processes in which a reactor made of stainless steel is washed with a phenol compound (Japanese Patent Application Laid-Open Nos. Heisei 6 (1994)-56,984 and Heisei 6(1994)-200,008) have been attempted. However, none of these processes provide a sufficient effect and are satisfactory.

### DISCLOSURE OF THE INVENTION

Under the above circumstances, the present invention has an object of providing an industrially advantageous process for producing a polycarbonate by transesterification which efficiently produces a high molecular weight polycarbonate having an excellent color tone by using an inexpensive reactor made of stainless steel; an apparatus for producing a polycarbonate which is used in this process; and a process for treating the surface of an apparatus to obtain this apparatus.
As the result of extensive studies conducted by the present inventors to achieve the above object, it was found that, when a reactor which is used for the reaction has been treated by heating or by washing with a specific compound at least at a part which is in contact with a liquid, a high molecular weight polycarbonate having an excellent color tone

can easily be obtained even when the material of the part of the apparatus which is in contact with a liquid is stainless steel. It was also found that, when the part of an apparatus which is in contact with a liquid is made of stainless steel, and the surface of this part is treated so that the surface of stainless steel in contact with a liquid is in a specific state, the apparatus can be used very effectively for producing a polycarbonate by transesterification. The present invention was completed based on this knowledge.

Accordingly, the present invention provides:

(1) A process for producing a polycarbonate by transesterification comprising using a reactor which has been treated by heating at least at a part which is in contact with a liquid;
(2) A process for producing a polycarbonate by transesterification comprising using a reactor which has been treated by washing with a compound containing carbonyl group at least at a part which is in contact with a liquid;
(3) A process for producing a polycarbonate by transesterification comprising using a reactor which has been treated, at least at a part which is in contact with a liquid, by washing with a compound containing hydroxyl group represented by general formula (II):

$$R^3\text{-A-OH} \qquad \text{(II)}$$

wherein $R^3$ represents hydrogen atom, an alkyl group, or an aryl group, and A represents an alkylene group or an alkenylene group;
(4) An apparatus for producing a polycarbonate by transesterification which is made of stainless steel at least at a part which is in contact with a liquid, wherein a spectrum obtained by XPS (X-ray photoelectron spectroscopy) analysis of the surface of the part which is in contact with a liquid shows $D_2/D_1$ of 1,2 or smaller, $D_1$ being an intensity of the smallest peak in a range of 529.5 to 530.5 eV, and $D_2$ being an intensity of the largest peak in a range of 531.0 to 532.0 eV;
(5) An apparatus for producing a polycarbonate by transesterification which is made of stainless steel at least at a part which is in contact with a liquid, wherein FeOOH, CrOOH, and NiOOH are substantially absent on the surface of the part which is in contact with a liquid;
(6) A process for treating the surface of an apparatus for producing a polycarbonate by transesterification which is made of stainless steel at least at a part which is in contact with a liquid, which process comprises treating the surface of the part of the apparatus which is in contact with a liquid by heating so that a spectrum obtained by XPS analysis of the surface of the part which is in contact with a liquid shows $D_2/D_1$ of 1,2 or smaller, $D_1$ being an intensity of the smallest peak in a range of 529.5 to 530.5 eV, and $D_2$ being an intensity of the largest peak in a range of 531.0 to 532.0 eV; and
(7) A process for treating the surface of an apparatus for producing a polycarbonate by transesterification which is made of stainless steel at least at a part which is in contact with a liquid, which process comprises treating the surface of the part of the apparatus which is in contact with a liquid by heating so that FeOOH, CrOOH, and NiOOH are substantially absent on the surface.

## BRIEF DESCRIPTION OF THE DRAWINGS

Figures 1, 2, 3, 4, 5, and 6 show charts of spectra obtained by the XPS analysis of the surface of stainless steel test pieces treated in Examples 12, 13, and 14, and Comparative Examples 12, 13, and 14, respectively. Figures 7, 8, and 9 show charts exhibiting the results of wave form separation of spectra obtained by the XPS analysis of the surface of stainless steel test pieces treated in Example 15 and Comparative Examples 16 and 17, respectively.

## THE MOST PREFERRED EMBODIMENT TO CARRY OUT THE INVENTION

The process for producing a polycarbonate, the apparatus for producing a polycarbonate, and the process for treating the surface of the apparatus for producing a polycarbonate of the present invention are all applied to production of a polycarbonate by transesterification.

In the process for producing a polycarbonate of the present invention, a reactor which has been treated by (1) heating, (2) washing with a compound containing carbonyl group, or (3) washing with a compound containing hydroxyl group at least at a part which is in contact with a liquid is used for producing a polycarbonate by transesterification. It is necessary that the part of the reactor which is in contact with a liquid (the part which is in contact with reactants) be treated by treatment (1), (2), or (3), and it is not necessary that the entire part of the reactor is treated by treatment (1), (2), or (3).

The material for the reactor is inexpensive stainless steel. It is not necessary that this material is used for the entire part of the reactor. Stainless steel described above is a steel containing 10 to 30 % by weight of chromium. Specific examples of stainless steel include SUS 304, SUS 304L, SUS 309, SUS 310, SUS 316, and SUS 316L. However, stainless steel is not limited to these examples.

The part which is treated by treatment (1), (2), or (3) may be treated by polishing, such as mechanical polishing such as polishing by buffing and electropolishing, or by a chemical treatment, such as washing with an acid, washing with an alkali, and a combination of these methods, before being treated by treatment (1), (2), or (3).

The method of electropolishing is not particularly limited, and a conventional method can be used. For example, by supplying direct electric current from the outside to an article for polishing which is connected to an anode of the electric current and disposed at a position faced to a cathode in an electrolytic solution, rough parts, particularly protruded parts, of the article for polishing are electrolytically dissolved to achieve polishing. Examples of the electrolytic solution used in the above method include solutions containing a mixed acid as the major component, such as a mixed acid containing phosphoric acid and chromic anhydride, phosphoric acid and sulfuric acid, or perchloric acid and acetic anhydride. The condition of electrolysis is not particularly limited, and a current density in the range of 0.1 to 300 A/dm$^2$ is generally used.

The method of polishing by buffing is described in Japanese Industrial Standard H0400-1982. More specifically, emery or a mixture of oil, fats, and polishing powder having a specific grain diameter is transferred to circumferential parts of vane cloths, and the polishing is conducted. The index for the surface roughness after the polishing is specified in Japanese Industrial Standard B0601-1970. In the washing with an acid, an article for polishing is dipped into a solution containing phosphoric acid, nitric acid, sulfuric acid, or hydrofluoric acid as the major component at a room temperature or under heating for a specified time, washed with water, and then dried. In the washing with an alkali, an article for polishing is dipped into a solution containing sodium hydroxide, potassium hydroxide, sodium carbonate, or sodium hydrogencarbonate as the major component at a room temperature or under heating for a specified time, washed with water, and then dried.

The method of treatment by heating in treatment (1) described above is not particularly limited. For example, it is advantageous that the treatment is conducted by heating in an ordinary atmosphere at a temperature in the range of 300 to 600°C, preferably in the range of 300 to 500°C, more preferably in the range of 400 to 450°C, for 10 minutes or more. It is preferable that treatment (1) is conducted in combination with the above electropolishing because of an increased effect.

Generally in mechanical polishing, polishing is conducted by using an abrasive having a grain size which is in accordance with the desired precision of finishing. Therefore, fine streaks formed by abrasive grains exist on the entire polished surface when the surface is observed microscopically, and the real surface area is several times as much as the apparent geometrical surface area. Fine metal particles are buried into grooves of the streaks formed by the abrasive grains just like wedges are. These particles are removed and mixed into a polymer to show adverse effects. Therefore, it is difficult to obtain a polycarbonate having the desired quality by mechanical polishing. In contrast, the real surface area of a polished article obtained by electropolishing is about the same as the apparent geometrical area, i.e., about 1.0 to 1.5 times as much as the apparent geometrical area. As for the elemental composition on the surface, the amount of chromium on the surface obtained by electropolishing is larger than that obtained by mechanical polishing (when stainless steel is used as the material). However, even when the passive state is formed by washing with an acid and the amount of chromium is adjusted to an amount about the same as or larger than that obtained by electropolishing, an effect as remarkable as that obtained by electropolishing cannot be obtained by mechanical polishing. Therefore, the synergistic effect of the combination of the treatment by heating and electropolishing is considered to be obtained by some different reasons.

In the present invention, the compound containing carbonyl group which is used for the treatment by washing of treatment (2) is not particularly limited, and various compounds can be used. For example, a compound represented by general formula (I):

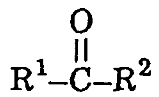

... (I)

is preferably used. In general formula (I), $R^1$ and $R^2$ each represents hydrogen atom, hydroxyl group, an alkoxy group, an aryloxy group, an alkyl group, an alkyl group containing carbonyl group, an aryl group, an aryl group containing carbonyl group, amino group, or a substituted amino group. $R^1$ and $R^2$ may be the same or different, do not represent hydroxyl group simultaneously, and may form a ring structure by being bonded to each other. The alkyl group may be linear or branched. Examples of the alkyl group include alkyl groups having 1 to 20 carbon atoms, such as methyl group,

ethyl group, propyl group, butyl group, pentyl group, and hexyl group. Examples of the aryl group include phenyl group, naphthyl group, tolyl group, xylyl group, benzyl group, and phenetyl group. Examples of the alkoxy group include alkoxy groups having 1 to 20 carbon atoms which correspond to the above alkyl groups. Examples of the aryloxy groups include aryloxy groups which correspond to the above aryl groups. Examples of the alkyl group containing carbonyl group include alkyl groups having 1 to 20 carbon atoms and containing one or more carbonyl groups which correspond to the alkyl groups described above. Examples of the aryl group containing carbonyl group include aryl groups containing one or more carbonyl groups which correspond to the aryl groups described above. Examples of the substituted amino group include amino groups substituted with one or two alkyl or aryl groups described above.

Examples of the compound containing carbonyl group which is represented by general formula (I) include benzaldehyde, benzoic acid, 2,4-pentanedione, dimethyl carbonate, diphenyl carbonate, acetophenone, benzophenone, cyclohexanone, N,N-dimethylformamide, succinimide, methyl ethyl ketone, and methyl isobutyl ketone.

Among these compounds, compounds containing carbonyl group represented by general formula (I) in which one of $R^1$ and $R^2$ represents hydrogen atom, hydroxyl group, an alkyl group containing carbonyl group, or an aryl group containing carbonyl group, and the other of $R^1$ and $R^2$ represents an alkyl group or an aryl group are preferable because of the excellent effect of the treatment. Representative examples of the preferable compound include benzaldehyde and 2,4-pentanedione (acetylacetone).

In the present invention, the compound containing carbonyl group may be used singly or as a combination of two or more types. The temperature of the treatment by washing with the above compound is not particularly limited. It is advantageous from the standpoint of the effect of the treatment that the treatment is conducted at a room temperature or higher, preferably at 100°C or higher, within the range which is the same as or higher than the melting point and lower than the boiling point of the used compound containing carbonyl group. The time of the treatment is not particularly limited and is preferably 10 minutes or more, more preferably 1 hour or more, from the standpoint of the effect of the treatment.

In the treatment by washing of treatment (3) described above, a compound represented by general formula (II):

$$R^3\text{-A-OH} \qquad \text{(II)}$$

is used as the compound containing hydroxyl group. In general formula (II), $R^3$ represents hydrogen atom, an alkyl group, or an aryl group. The alkyl group may be linear or branched. Preferable examples of the alkyl group include alkyl groups having 2 to 20 carbon atoms, such as ethyl group, propyl group, butyl group, pentyl group, and hexyl group. Examples of the aryl group include phenyl group, naphthyl group, tolyl group, xylyl group, benzyl group, and phenetyl group. A represents an alkylene group or an alkenylene group. Preferable examples of the alkylene group include linear or branched alkylene groups having 1 to 10 carbon atoms, such as methylene group, ethylene group, propylene group, butylene group, pentylene group, hexylene group, octylene group, decylene group. Preferable examples of the alkenylene group include linear or branched alkenylene groups having 2 to 10 carbon atoms, such as vinylene group, allylene group, butenylene group, pentenylene group, hexenylene group, octenylene group, and decenylene group.

Preferable examples of the compound containing hydroxyl group which is represented by general formula (II) include 1-hexanol, 1-heptanol, 2-octanol, 1-nonanol, 1-dodecanol, 1-tetradecanol, and benzyl alcohol.

In the present invention, the compound containing hydroxyl group may be used singly or as a combination of two or more compounds. The temperature of the treatment by washing with the above compound is not particularly limited. It is advantageous from the standpoint of the effect of the treatment that the treatment is conducted at 100°C or higher, within the range which is the same as or higher than the melting point and lower than the boiling point of the used compound containing hydroxyl group. The time of the treatment is not particularly limited and is preferably 10 minutes or more, more preferably 1 hour or more, from the standpoint of the effect of the treatment.

The present invention also provides (i) apparatus (I) which is made of stainless steel at least at a part which is in contact with a liquid, wherein a spectrum obtained by the XPS analysis of the surface of the part which is in contact with a liquid shows $D_2/D_1$ of 1,2 or smaller, $D_1$ being an intensity of the smallest peak in a range of 529.5 to 530.5 eV, and $D_2$ being an intensity of the largest peak in a range of 531.0 to 532.0 eV; and (ii) apparatus (II) which is made of stainless steel at least at a part which is in contact with a liquid, wherein FeOOH, CrOOH, and NiOOH are substantially absent on the surface of the part which is in contact with a liquid.

The above apparatus constitutes the entire apparatus or a portion of the apparatus used for producing a polycarbonate by transesterification. This apparatus is typically a reactor, such as a vertical type stirred reactor or a horizontal type stirred reactor, and may also be an apparatus other than a reactor, such as a piping, a valve, or a storage tank for raw materials. In other words, this apparatus may be any apparatus having a part which is directly in contact with raw materials, intermediate products, or products in a process for producing a polycarbonate by transesterification.

In the present invention, at least the part of the apparatus which is in contact with a liquid is made of inexpensive stainless steel. Examples of stainless steel include SUS 304, SUS 3-4L, SUS 309, SUS 310, SUS 316, and SUS 316L.

In apparatus (I) described above, a spectrum obtained by the XPS analysis of the surface of the part which is

in contact with a liquid, i.e., the part which is in contact with raw materials, intermediate products, or products in the production of a polycarbonate, shows $D_2/D_1$ of 1.2 or less, more preferably 0.9 or less. $D_1$ is an intensity of the smallest peak in a range of 529.5 to 530.5 eV, and $D_2$ is an intensity of the largest peak in a range of 531.0 to 532.0 eV. A high molecular weight polycarbonate having an excellent color tone can be obtained by transesterification using an apparatus made of stainless steel when the surface of the part of the apparatus which is in contact with a liquid is in the above state. The intensity of a peak in an XPS spectrum means the height, not the area, of the peak from the base line in the spectrum. The base line is drawn in accordance with the method of CHALET.

It was found by the present inventors that the ratio of intensities $D_2/D_1$ completely and exactly represents the characteristic of the shape of the spectrum which is closely related to the color tone and the molecular weight of the produced polycarbonate, and therefore completely and exactly represents the state of the inner surface of the reactor.

On the surface of stainless steel, iron oxides ($Fe_xO_y$), such as FeOOH, $Fe_2O_3 \cdot H_2O$, $Fe_2O_3$, $Fe_3O_4$, and FeO, chromium oxides, and nickel oxides are present in a mixed condition. The presence of FeOOH is generally observed at the outermost layer of the surface ["HYOMEN", Vol. 31, No. 8, Page 27 (1993); "J. SOC. MAT. SCI., JAPAN", Vol. 44, No. 606, Page 1314 (1995)].

When the presence of the above oxides is taken into consideration, the above XPS spectrum is considered to show the following: The spectrum in the range of 529.5 to 530.5 eV is mainly related to iron oxides ($Fe_xO_y$). The spectrum in the range of 531.0 to 532.0 eV is mainly related to FeOOH. Therefore, the ratio of the intensities $D_2/D_1$ can be considered to be related to the ratio of the amount of the group mainly containing FeOOH to the amount of the group mainly containing $Fe_xO_y$ in the distribution of components on the surface. That a specific value or less of this ratio is preferable generally means that the presence of the group mainly containing FeOOH is not preferable in comparison with the presence of the group mainly containing iron oxides ($Fe_xO_y$).

In apparatus (II) described above, FeOOH, CrOOH, and NiOOH are substantially absent on the surface of the part of the apparatus which is in contact with a liquid. This apparatus has been developed as the result of detailed studies of the relation between the color tone and the molecular weight of a polycarbonate obtained by transesterification and components on the surface of stainless steel using XPS spectra and also as the result of studies in which various types of iron oxides were added, as exhibited in Reference Examples 1 to 4 shown later. When the surface of stainless steel constituting the part of the apparatus which is in contact with a liquid is in the above state, a high molecular weight polycarbonate having an excellent color tone can be obtained by using this apparatus.

The substantial absence of FeOOH, CrOOH, and NiOOH can be confirmed specifically by utilizing the wave form separation of the spectrum obtained by the XPS analysis of the surface. When the wave form separation of the XPS spectrum of the surface shows that the ratio: the intensity of MOOH peak/(the sum of intensities of $M_xO_y$ peak and MOOH peak) is 0.3 or less, more preferably 0.2 or less, it can be concluded that MOOH is substantially absent, and the object of the present invention can be achieved, wherein Fe, Cr, and Ni are represented by M. The intensity of a peak means the area under the peak obtained by the wave form separation.

The method of calculation of the ratio of intensities is described in more detail in the following:

In an XPS spectrum of the surface of the part of an apparatus which is in contact with a liquid, peaks are assigned as follows: (a) the basic peak top assigned to $M_xO_y$: 530.1 eV; (b) the peak top assigned to MOOH: 531.4 eV; (c) the peak top assigned to C=O, and C-OH: 532.3 eV; and (d) the peak top assigned to $H_2O$: 533.6 eV. The XPS spectrum is separated into four wave forms based on these assignments. The peak top of FeOOH in the XPS spectrum of the surface of stainless steel is assigned as described above in accordance with the spectrum of 1S orbital of oxygen atom with reference to "ANAL. CHEM.", Vol. 49, No. 11, Page 1521 (1977); "HYOMEN", Vol. 31, No. 8, Page 27 (1993); and "SURFACE AND INTERFACE ANALYSIS", Vol. 21, Page 336 (1994).

The separation into the four wave forms is conducted in accordance with the method of least squares under such a condition that the position of the peak top of a separated wave form be within $\pm 0.2$ eV of the peak top value of this wave form which is assigned above in (a) to (d). The obtained intensity (the area) of the wave form assigned to (a) $M_xO_y$ is used as the intensity of the peak of $M_xO_y$, and the obtained intensity (the area) of the wave form assigned to (b) MOOH is used as the intensity of the peak of MOOH.

The chart of a wave form obtained by the separation is generally modified by converting the base line into the X-axis and used for obtaining the intensity (the area) of the separated wave form. The area enclosed by the X-axis and the separated wave form is obtained by approximation to a normal distribution curve. The obtained value is used as the intensity of the peak.

When the ratio: the intensity of MOOH peak/(the sum of intensities of $M_xO_y$ peak and MOOH peak) is 0.4 or less, MOOH (i.e., FeOOH, CrOOH, and NiOOH) is substantially absent on the surface, and the surface of the apparatus is in a state which enables producing a polycarbonate having satisfactory color tone and molecular weight.

When the relative amounts of Fe, Cr, and Ni present on the surface of stainless steel is considered, the above method of evaluation from the intensities can actually be regarded as a method of finding the absence or presence of FeOOH on the surface of the part which is in contact with a liquid from the amount of FeOOH relative to the amount of $Fe_xO_y$. In other words, when FeOOH is substantially absent in comparison with $Fe_xO_y$, the object of the present invention

can be achieved. As shown in Reference Examples 1 to 4 which are described later, it can be confirmed that the presence of FeOOH in the polymerization system adversely affects the formation of a high molecular weight polycarbonate.

In apparatuses (I) and (II) of the present invention, the method of forming the surface of the part of the apparatuses which is in contact with a liquid into the above state is not particularly limited, and various methods can be used. In accordance with the process of the present invention, the surface of the apparatus which is in contact with a liquid can efficiently be formed into the desired state by treating the surface by heating.

As the method of treatment by heating, heating by an electric oven or heating by flame of a portable burner which is easily used is advantageously conducted. When the treatment by heating is conducted by using an electric oven, the temperature of the heated surface is adjusted to 300 to 600°C, and the heating is conducted for about 0.5 to 2 hours. The object of the surface treatment is to remove compounds such as FeOOH from the surface of stainless steel. The effectiveness of the treatment by heating is suggested by the fact that FeOOH is decomposed into $Fe_2O_3$ and water by heating ("KAGAKU DAIJITEN", Vol. 5; published by KYORITU SHUPPAN Co., Ltd.).

As a method of treatment other than those described above, a treatment by reduction using carbon monoxide or a hydrazine or a treatment by dehydration using phosphorus pentaoxide dissolved in a solvent may be conducted.

Compounds such as FeOOH on the surface of stainless steel is not regenerated once they have been removed unless stainless steel is affected by a corrosive environment or oxidation after mechanical polishing. Therefore, the apparatus of the present invention can be used continuously.

The process for producing a polycarbonate by transesterification of the present invention can be conducted by transesterification in a reactor which has been treated at least at the part which is in contact with a liquid using raw materials which are generally used for producing a polycarbonate by transesterification. It is preferable that at least the part of the reactor which is in contact with a liquid is made of stainless steel.

The raw materials used in the transesterification is not particularly limited, and various types of raw materials which are generally used for producing a polycarbonate by transesterification can be used.

For example, the transesterification can be conducted by using following combinations of raw materials: (i) a dihydroxy compound as component (A) and a diester of carbonic acid as component (B); (ii) a diester of a dihydroxy compound as component (A) and a diester of carbonic acid as component (B); (iii) a dicarbonate of a dihydroxy compound as component (A) and a diester of carbonic acid as component (B); (iv) a dicarbonate of a dihydroxy compound (self-condensation); and (v) a monocarbonate of a dihydroxy compound (self-transesterification).

Among these combinations of raw materials, combination (i) of a dihydroxy compound as component (A) and a diester of carbonic acid as component (B) is preferably used.

Examples of the dihydroxy compound of component (A) which is preferably used in the transesterification include aromatic dihydroxy compounds and aliphatic dihydroxy compounds. At least one compound selected from these compounds is used.

Examples of the aromatic dihydroxy compound used as one of the compounds of component (A) include compounds represented by general formula (III):

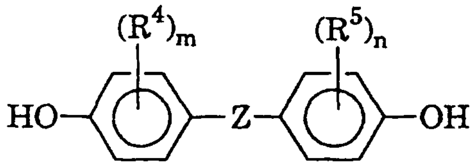

... (III)

In general formula (III), $R^4$ and $R^5$ each represents a halogen atom, such as fluorine, chlorine, bromine, and iodine; or an alkyl group having 1 to 8 carbon atoms, such as methyl group, ethyl group, n-propyl group, isopropyl group, n-butyl group, isobutyl group, sec-butyl group, t-butyl group, pentyl group, hexyl group, cyclohexyl group, heptyl group, and octyl group. $R^4$ and $R^5$ may be the same or different. When a plurality of $R^4$ are present, the plurality of $R^4$ may be the same with each other or different from each other. When a plurality of $R^5$ are present, the plurality of $R^5$ may be the same with each other or different from each other. m and n each represents an integer of 0 to 4. Z represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, $-SO_2-$, -O-, -CO-, or a bond expressed by formula (IV) or (IV'):

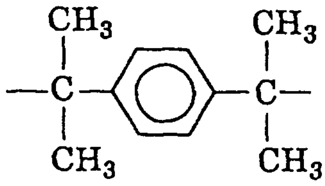

... (IV)

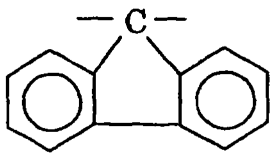

... (IV')

Examples of the alkylene group having 1 to 8 carbon atoms and the alkylidene group having 2 to 8 carbon atoms include methylene group, ethylene group, propylene group, butylene group, pentylene group, hexylene group, ethylidene group, and isopropylidene group. Examples of the cycloalkylene group having 5 to 15 carbon atoms and the cycloalkylidene group having 5 to 15 carbon atoms include cyclopentylene group, cyclohexylene group, cyclpentylidene group, and cyclohexylidene group.

Examples of the aromatic dihydroxy compound represented by general formula (III) shown above include bis (hydroxyaryl)alkanes, such as bis(4-hydroxyphenyl)methane, bis(3-methyl-4-hydroxyphenyl)-methane, bis(3-chloro-4-hydroxyphenyl)methane, bis(3,5-dibromo-4-hydroxyphenyl)methane, 1,1-bis(4-hydroxyphenyl)ethane, 1,1-bis(2-t-butyl-4-hydroxy-3-methylphenyl)ethane, 1-phenyl-1,1-bis(3-fluoro-4-hydroxy-3-methylphenyl)ethane, 2,2-bis(4-hydroxyphenyl)propane (so-called bisphenol A), 2,2-bis(3-methyl-4-hydroxyphenyl)propane, 2,2-bis(2-methyl-4-hydroxyphenyl)propane, 2,2-bis(3,5-dimethyl-4-hydroxylphenyl)propane, 1,1-bis(2-t-butyl-4-hydroxy-5-methylphenyl)propane, 2,2-bis(3-chloro-4-hydroxyphenyl)propane, 2,2-bis(3-fluoro-4-hydroxyphenyl)-propane, 2,2-bis(3-bromo-4-hydroxyphenyl) propane, 2,2-bis(3,5-difluoro-4-hydroxyphenyl)propane, 2,2-bis(3,5-dichloro-4-hydroxyphenyl)propane, 2,2-bis(3,5-dibromo-4-hydroxyphenyl)propane, 2,2-bis(4-hydroxyphenyl)-butane, 2,2-bis(4-hydroxyphenyl)octane, 2,2-bis(4-hydroxyphenyl)phenylmethane, 2,2-bis(4-hydroxy-1-methylphenyl)propane, 1,1-bis(4-hydroxy-t-butylphenyl)propane, 2,2-bis (4-hydroxy-3-bromophenyl)propane, 2,2-bis(4-hydroxy-3,5-dimethylphenyl)propane, 2,2-bis(4-hydroxy-3-chlorophenyl) propane, 2,2-bis(4-hydroxy-3,5-dichlorophenyl)propane, 2,2-bis(4-hydroxy-3,5-dibromophenyl)propane, 2,2-bis(3-bromo-4-hydroxy-5-chlorophenyl)propane, 2,2-bis(3-phenyl-4-hydroxyphenyl)propane, 2,2-bis(4-hydroxyphenyl)butane, 2,2-bis(3-methyl-4-hydroxyphenyl)butane, 1,1-bis(2-butyl-4-hydroxy-5-methylphenyl)butane, 1,1-bis(2-t-butyl-4-hydroxy-5-methylphenyl)butane, 1,1-bis(2-t-butyl-4-hydroxy-5-methylphenyl)isobutane, 1,1-bis(2-t-amyl-4-hydroxy-5-methylphenyl)butane, 2,2-bis(3,5-dichloro-4-hydroxyphenyl)butane, 2,2-bis(3,5-dibromo-4-hydroxyphenyl)butane, 4,4-bis(4-hydroxyphenyl)heptane, 1,1-bis(2-t-butyl-4-hydroxy-5-methylphenyl)heptane, 2,2-bis(4-hydroxyphenyl)octane, and 1,1-(4-hydroxyphenyl)ethane; bis(hydroxyaryl)cycloalkanes, such as 1,1-bis(4-hydroxyphenyl)cyclopentane, 1,1-bis(4-hydroxyphenyl)cyclohexane, 1,1-bis(3-methyl-4-hydroxyphenyl)cyclohexane, 1,1-bis(3-cyclohexyl-4-hydroxyphenyl)cyclohexane, 1,1-bis(3-phenyl-4-hydroxyphenyl)-cyclohexane, and 1,1-bis(4-hydroxyphenyl)-3,5,5-trimethylcyclohexane; bis(hydroxyaryl) ethers, such as bis(4-hydroxyphenyl) ether and bis(4-hydroxy-3-methylphenyl) ether; bis (hydroxyaryl) sulfides, such as bis(4-hydroxyphenyl) sulfide and bis(3-methyl-4-hydroxyphenyl) sulfide; bis(hydroxyaryl) sulfoxides, such as bis(4-hydroxyphenyl) sulfoxide, bis(3-methyl-4-hydroxyphenyl) sulfoxide, and bis(3-phenyl-4-hydroxyphenyl) sulfoxide; bis(hydroxyaryl) sulfones, such as bis(4-hydroxyphenyl) sulfone, bis(3-methyl-4-hydroxyphenyl) sulfone, and bis(3-phenyl-4-hydroxyphenyl) sulfone; and dihydroxybiphenyls, such as 4,4'-dihydroxybiphenyl, 4,4'-dihydroxy-2,2'-dimethylbiphenyl, 4,4'-dihydroxy-3,3'-dimethylbiphenyl, 4,4'-dihydroxy-3,3'-dicyclohexylbiphenyl, and 3,3'-difluoro-4,4'-dihydroxybiphenyl.

Examples of the aromatic dihydroxy compounds other than the compounds represented by general formula (III) include dihydroxybenzenes, halogenated dihydroxybenzenes, and alkylsubstituted dihydroxybenzenes. Specific examples include resorcinol, 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, 2,3,4,6-tetrabromoresorcinol, catechol, hydroquinone, 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,5-dichlorohydroquinone, 2,3,5,6-tetramethylhydroquinone, 2,3,4,6-tetra-t-butylhydroquinone, 2,3,5,6-tetrafluorohydroquinone, and 2,3,5,6-tetrabromohydroquinone.

As the aliphatic dihydroxy compound used as one of the compounds of component (A), various compounds can be used. Examples of such compound include butane-1,4-diol, 2,2-dimethylpropane-1,3-diol, hexane-1,6-diol, diethylene glycol, triethylene glycol, tetraethylene glycol, octaethylene glycol, dipropylene glycol, N,N-methyldiethanolamine, cylcohexane-1,3-diol, cyclohexane-1,4-diol, 1,4-dimethylolcyclohexane, p-xylylene glycol, 2,2-bis(4-hydroxycyclohexyl)-propane, and ethoxy compounds or propoxy compounds obtained from dihydric alcohols and phenols, such as bisoxyethylbisphenol A, bis-oxyethyl-tetrachlorobisphenol A, and bis-oxyethyl-tetrachlorohydroquinone.

In the preferable process for producing a polycarbonate of the present invention, one or more compounds suitably selected from the above compounds are used as the dihydroxy compound of component (A). Among these compounds, bisphenol A which is an aromatic dihydroxy compound is preferably used.

In the present invention, various compounds can be used as the diester of carbonic acid of component (B). For example, at least one compound selected from the group consisting of diaryl carbonate compounds, dialkyl carbonate compounds, and alkyl aryl carbonate compounds can be used.

The diaryl carbonate compound used as one of the compounds of component (B) is a compound represented by general formula (V):

$$Ar^1\ O\overset{\overset{O}{\|}}{C}O\ Ar^2 \qquad \cdots\ (V)$$

wherein $Ar^1$ and $Ar^2$ each represents an aryl group and may the same or different, or a compound represented by general formula (VI):

$$Ar^3\ O\overset{\overset{O}{\|}}{C}O - D^1 - O\overset{\overset{O}{\|}}{C}O\ Ar^4 \qquad \cdots\ (VI)$$

wherein $Ar^3$ and $Ar^4$ each represents an aryl group and may be the same or different, and $D^1$ represents a residue group derived from one of the above aromatic dihydroxy compounds by elimination of two hydroxy groups.

The dialkyl carbonate compound is a compound represented by general formula (VII):

$$R^6\ O\overset{\overset{O}{\|}}{C}O\ R^7 \qquad \cdots\ (VII)$$

wherein $R^6$ and $R^7$ each represents an alkyl group having 1 to 6 carbon atoms or a cycloalkyl group having 4 to 7 carbon atoms and may be the same or different, or a compound represented by general formula (VIII):

$$R^8\ O\overset{\overset{O}{\|}}{C}O - D^2 - O\overset{\overset{O}{\|}}{C}O\ R^9 \qquad \cdots\ (VIII)$$

wherein $R^8$ and $R^9$ each represents an alkyl group having 1 to 6 carbon atoms or a cycloalkyl group having 4 to 7 carbon atoms and may be the same or different, and $D^2$ represents a residue group derived from one of the above aromatic dihydroxy compounds by elimination of two hydroxy groups.

The alkyl aryl carbonate compound is a compound represented by general formula (X):

$$Ar^5\ O\overset{\overset{O}{\|}}{C}O\ R^{10} \qquad \cdots\ (IX)$$

wherein $Ar^5$ represents an aryl group and $R^{10}$ represents an alkyl group having 1 to 6 carbon atoms or a cycloalkyl group having 4 to 7 carbon atoms, or a compound represented by general formula (X):

$$Ar^{6}\,O\overset{\overset{O}{\|}}{C}O-D^{3}-O\overset{\overset{O}{\|}}{C}O\,R^{11} \qquad \cdots (X)$$

wherein $Ar^6$ represents an aryl group, $R^{11}$ represents an alkyl group having 1 to 6 carbon atoms or a cycloalkyl group having 4 to 7 carbon atoms, and $D^3$ represents a residue group derived from one of the above aromatic dihydroxy compounds by elimination of two hydroxy groups.

Examples of the diaryl carbonate compound include diphenyl carbonate, ditolyl carbonate, bis(chlorophenyl) carbonate, bis(m-cresyl) carbonate, dinaphthyl carbonate, bis(diphenyl) carbonate, and bisphenol A bisphenol carbonate.

Examples of the dialkyl carbonate compound include diethyl carbonate, dimethyl carbonate, dibutyl carbonate, dicyclohexyl carbonate, and bisphenol A bismethyl carbonate.

Examples of the alkyl aryl carbonate compound include methyl phenyl carbonate, ethyl phenyl carbonate, butyl phenyl carbonate, cyclohexyl phenyl carbonate, and bisphenol A methyl phenyl carbonate.

In the present invention, one or more compounds suitably selected from the above compounds can be used as the diester of carbonic acid of component (B). Among these compounds, diphenyl carbonate is preferable.

Raw materials used in the present invention which are other than the above dihydroxy compounds and the above diesters of carbonic acid are as follows.

Examples of the diester of a dihydroxy compound include bisphenol A diacetate, bisphenol A dipropionate, bisphenol A dibutyrate, and bisphenol A dibenzoate.

Examples of the dicarbonate of a dihydroxy compound include bisphenol A bis(methyl carbonate), bisphenol A bis(ethyl carbonate), and bisphenol A bis(phenyl carbonate).

Examples of the monocarbonate of a dihydroxy compound include bisphenol A mono(methyl carbonate), bisphenol A mono(ethyl carbonate), bisphenol A mono(propyl carbonate), and bisphenol A mono(phenyl carbonate).

In the process for producing a polycarbonate of the present invention, a chain terminator can be used in accordance with necessity. Examples of the chain terminator include monohydric phenols, such as o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, o-cyclohexylphenol, m-cyclohexylphenol, p-cyclohexylphenol, o-phenylphenol, m-phenylphenol, p-phenolphenol, o-n-nonylphenol, m-n-nonylphneol, p-n-nonylphenol, o-cumylphenol, m-cumylphenol, p-cumylphenol, o-naphthylphenol, m-naphthylphenol, p-naphthylphenol, 2,6-di-t-butylphenol, 2,5-di-t-butylphenol, 2,4-di-t-butylphenol, 3,5-di-t-butylphenol, 2,5-dicumylphenol, 3,5-dicumylphenol, compounds expressed by the formulae:

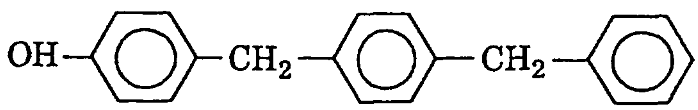

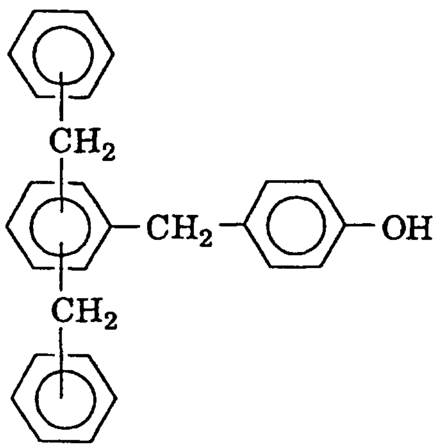

and derivatives of chroman expressed by the formulae:

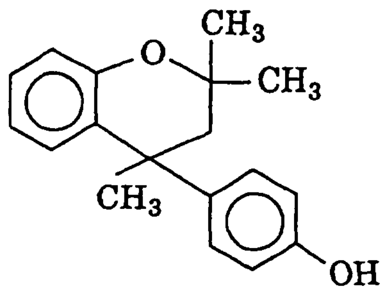

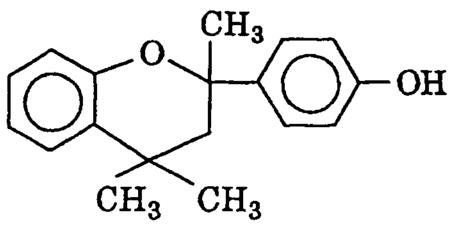

Among these phenols, p-t-butylphenol, p-cumylphenol, and p-phenylphenol are preferable although the chain terminator is not limited to these preferable phenols.

Compounds represented by the formulae:

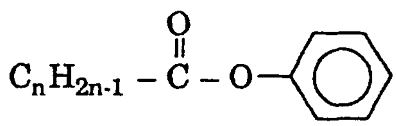

$C_nH_{2n-1}$ - OH

wherein n represents an integer of 7 to 30,

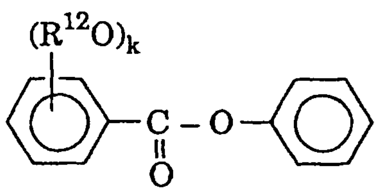

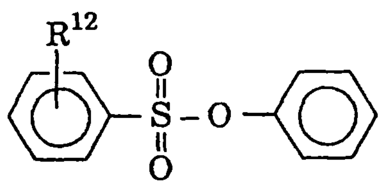

wherein $R^{12}$ represents an alkyl group having 1 to 12 carbon atoms, and k represents an integer of 1 to 3, can also be used as the chain terminator.

In the present invention, a branching agent, such as phloroglucinol, trimellitic acid, 1,1,1-tris(4-hydroxyphenyl) ethane, 1-[α-methyl-α-(4'-hydroxyphenyl)ethyl]-4-[α',α'-bis(4"-hydroxyphenyl)ethyl]-benzene, α,α',α,"-tris(4-hydroxyphenyl)-1,3,5-triisopropylbenzene, or isatinebis(o-cresol), can be used in accordance with necessity.

In the present invention, a conventional catalyst, such as an inorganic basic compound and an organic basic compound, can be used for accelerating the transesterification in accordance with necessity. Examples of the inorganic basic compound include elements, oxides, hydroxides, amide compounds, alcoholates, and phenolates of alkali metals and alkaline earth metals; basic metal oxides, such as ZnO, PbO, and $Sb_2O_3$; organic titanium compounds; soluble manganese compounds; and acetates of Ca, Mg, Zn, Pb, Sn, Mn, Cd, and Co.

Examples of the organic basic compound include aliphatic tertiary amine compounds, such as trimethylamine, triethylamine, tripropylamine, tributylamine, tripentylamine, trihexylamine, and dimethylbenzylamine; aromatic tertiary amines, such as triphenylamine; heterocyclic compounds containing nitrogen, such as N,N-dimethyl-4-aminopyridine, 4-diethylaminopyridine, 4-pyrrolidinopyridine, 4-aminopyridine, 2-aminopyridine, 2-hydroxypyridine, 4-hydroxypyridine, 2-methoxypyridine, 4-methoxypyridine, imidazole, 2-methylimidazole, 4-methylimidazole, 2-dimethylaminoimidazole, 2-methoxyimidazole, 2-mercaptoimidazole, aminoquinoline, and diazabicyclooctane (DABCO); ammonium hydroxides having alkyl groups, aryl groups, or alkylaryl groups, such as tetramethylammonium hydroxide, tetraethylammonium hydroxide, tetrabutylammonium hydroxide, and trimethylbenzylammonium hydroxide; basic salts, such as tetramethylammonium borohydride, tetrabutylammonium borohydride, tetrabutylammonium tetraphenyl borate, and tetramethylammonium tetraphenyl borate; and other basic compounds, such as 7-methyl-1,5,7-triazabicyclo[4.4.0]dece-5-ene (MTBD) and 1,8-diazabicyclo[5.4.0]undece-7-ene (DBU).

Among these compounds, trihexylamine, tetramethylammonium hydroxide, tetrabutylammonium hydroxide, and dimethylaminopyridine are preferably used because of high catalyst activity and easiness of removal by the melting treatment at a reduced pressure.

As the catalyst for transesterification, boron compounds, such as boric acid, trimethyl borate, triethyl borate, tributyl borate, triheptyl borate, triphenyl borate, and trinaphthyl borate, can also be used.

In the present invention, the above catalyst may be used singly or as a combination of two or more types. The amount is generally selected in the range of $1\times10^{-2}$ to $1\times10^{-8}$ mol per 1 mol of the dihydroxy compound used as one of the raw materials. When the amount is less than $1\times10^{-8}$ mol, there is the possibility that the effect of the catalyst is not sufficiently exhibited. When the amount exceeds $1\times10^{-2}$ mol, there is the possibility that properties, particularly heat resistance and resistance to hydrolysis, of the obtained polycarbonate is decreased, and moreover, cost of production is increased. Therefore, such an amount is not preferable. The preferable amount of the catalyst is in the range of $1\times10^{-3}$ to $1\times10^{-7}$ mol per 1 mol of the dihydroxy compound from the standpoint of the catalytic effect, properties of the obtained polycarbonate, and economy.

Procedures and conditions in the preferable process for producing a polycarbonate by transesterification are described more specifically in the following.

The transesterification is first conducted using a diester of carbonic acid of component (B) in an amount by mol of 0.9 to 1.5 times, preferably 0.95 to 1.25 times, more preferably 1.0 to 1.2 times, the amount by mol of a dihydroxy compound of component (A) for achieving efficient reaction of the dihydroxy compound and the diester of carbonic acid.

When a chain terminator, such as a monohydric phenol described above, is present in an amount in the range of 0.05 to 10 % by mol of the dihydroxy compound of component (A) in the above transesterification, hydroxy chain ends of the obtained polycarbonate are blocked, and a polycarbonate having sufficient heat resistance and water resistance can be obtained.

The entire amount of the chain terminator, such as a monohydric phenol, may be added to the reaction system in advance. Alternatively, a portion of the chain terminator may be added to the reaction system in advance, and the remaining portion may be added while the reaction proceeds. The entire amount of the chain terminator may also be added to the reaction system after the transesterification between a dihydroxy compound of component (A) and a diester of carbonic acid of component (B) has partially proceeded.

In the transesterification, the temperature of transesterification is not particularly limited and can generally be selected in the range of 100 to 350°C. When the temperature of transesterification is lower than 100°C, the reaction rate is small. When the temperature of transesterification exceeds 350°C, problems arise in that side reactions take place and that the obtained polycarbonate is colored. Thus, such a temperature is not preferable. The preferable temperature of transesterification is in the range of 180 to 330°C from the standpoint of reaction rate, suppressed side reactions, and quality of the polycarbonate. Increasing the temperature gradually from 180°C to 300°C in accordance with the progress of the reaction is particularly preferable.

The pressure of transesterification is decided in accordance with the vapor pressure of the used monomers and the temperature of the reaction. The pressure is decided so that the reaction is conducted efficiently and not particularly limited. In many cases, the pressure is held at an atmospheric pressure (an ordinary pressure) or an added

pressure of 1 to 50 atm (760 to 38,000 torr) in the initial stage of the reaction and at a decreased pressure in later stages of the reaction, preferably at a pressure of 0.01 to 10 torr in the last stage of the reaction.

The transesterification is conducted until the desired molecular weight is achieved, and the time of the transesterification is generally about 0.2 to 9 hours.

The above transesterification is generally conducted in the absence of an inert solvent. However, the transesterification may be conducted in the presence of an inert solvent in an amount of 1 to 150 % by weight of the obtained polycarbonate. Examples of the inert solvent include aromatic compounds, such as diphenyl ether, halogenated diphenyl ethers, benzophenone, polyphenyl ether, dichlorobenzene, and methylnaphthalene; and cycloalkanes, such as tricyclo (5,2,10)decane, cyclooctane, and cyclodecane. The transesterification may be conducted in an atmosphere of an inert gas where necessary. Examples of the inert gas include gases, such as argon, carbon dioxide, dinitrogen oxide, and nitrogen; chlorofluorohydrocarbons; alkanes, such as ethane and propane; alkenes, such as ethylene and propylene; and other like gases.

In the present invention, an antioxidant may be added to the reaction system where necessary. As the antioxidant, phosphorus antioxidants are preferable. Examples of the phosphorus antioxidant include trialkyl phosphites, such as trimethyl phosphite, triethylphosphite, tributyl phosphite, trioctyl phosphite, trinonyl phosphite, tridecyl phosphite, trioctadecyl phosphite, distearyl pentaerythrityl diphosphite, tris(2-chloroethyl) phosphite, and tris(2,3-dichloropropyl) phosphite; tricycloalkyl phosphites, such as tricyclohexyl phosphite; triaryl phosphites, such as triphenyl phosphite, tricresyl phosphite, tris(ethylphenyl) phosphite, tris(butylphenyl) phosphite, tris(nonylphenyl) phosphite, and tris(hydroxyphenyl) phosphite; monoalkyl diaryl phosphites, such as 2-ethylhexyl diphenyl phosphite; trialkyl phosphates, such as trimethyl phosphate, triethylphosphate, tributyl phosphate, trioctyl phosphate, tridecyl phosphate, trioctadecyl phosphate, distearyl pentaerythrityl diphosphate, tris(2-chloroethyl) phosphate, and tris(2,3-dichloropropyl) phosphate; tricycloalkyl phosphates, such as tricyclohexyl phosphate; and triaryl phosphates, such as triphenyl phosphate, tricresyl phosphate, tris(nonylphenyl) phosphate, and 2-ethylphenyl diphenyl phosphate.

In the present invention, phenols and alcohols derived from the used diester of carbonic acid, esters derived from these compounds, and the inert solvent leave the reactor while the reaction proceeds. It is possible that these substances which have left the reactor are separated, purified, and recycled. Therefore, it is preferable that an apparatus for recovering these substances is attached.

The transesterification reaction may be conducted in accordance with a batch process or a continuous process. When the transesterification is conducted in accordance with a continuous process, it is preferable that at least two reactors are used and adjusted to the above reaction conditions.

The structure of the reactor used in the present invention is not particularly limited, and any structure may be adopted as long as stirring can be conducted in a conventional manner. It is preferable that the reactor is equipped with a stirrer suitable for a highly viscous system because the viscosity of the reaction system is increased in later stages of the reaction. A reactor having a shape of a tank may be used, and a reactor of an extruder type may also be used.

The polycarbonate obtained in accordance with the above process may be formed into granules without additional treatment or molded by using an extruder.

The polycarbonate obtained in accordance with the above process may be used after being mixed with conventional additives, such as plasticizers, pigments, lubricants, mold releases, stabilizers, and inorganic fillers.

The obtained polycarbonate can be blended with polymers, such as polyolefins, polystyrenes, polyesters, polysufonates, polyamides, and polyphenylene ethers. The polycarbonate can be used particularly effectively in combination with polyphenylene ethers having OH group, COOH group, or $NH_2$ group at the ends of the molecules, polyether nitriles, polysiloxane compounds modified at the ends of the molecules, modified polypropylenes, and modified polystyrenes.

In accordance with the present invention, a high molecular weight polycarbonate having an excellent color tone can be produced by transesterification even when an apparatus made of inexpensive stainless steel is used because the surface of the part of the apparatus which is in contact with a liquid has been treated as described above.

The present invention is described in more detail with reference to examples in the following. However, these examples are not to be construed to limit the scope of the invention.

Example 1

Into an autoclave which was made of SUS 316, had an inner volume of 100 ml, was equipped with a stirrer, and had been treated as shown in Table 1 at the part which would be in contact with the reaction mixture (a liquid), 22.8 g (0.1 mol) of bisphenol A, 23.5 g (0.11 mol) of diphenyl carbonate, $2.5\times10^{-5}$ mol of high purity tetramethylammonium hydroxide (a product of NIPPON TOKUSHU KAGAKU Co., Ltd.), and $2.5\times10^{-7}$ mol of calcium acetate were placed, and the autoclave was purged with nitrogen 5 times.

The obtained mixture was heated to 180°C, and the reaction was allowed to proceed in an argon atmosphere for 30 minutes. Then, the temperature was increased to 210°C, and the reaction was allowed to proceed for 30 minutes

while the pressure was gradually decreased to 100 mmHg. Subsequently, the temperature was increased to 240°C, and the reaction was allowed to proceed while the pressure was gradually decreased to 10 mmHg. The reaction was allowed to proceed further for 30 minutes after the temperature was increased to 270°C and the pressure was decreased to 2 mmHg. The reaction was allowed to proceed for additional 30 minutes at the pressure of 0.3 mmHg and then finished.

A viscous transparent condensate was taken out from the autoclave.

An 8% by weight solution of the obtained polycarbonate in methylene chloride was placed in a quartz cell of a height of 57 mm, and YI (yellow index) of this solution was measured by using a color meter (a product of SUGA SHIKENKI Co., Ltd.; SM-3). The obtained polycarbonate was dissolved in methylene chloride to prepare another solution, and the viscosity-average molecular weight was measured. The intrinsic viscosity [η] of the prepared methylene chloride solution was measured at 20°C, and the viscosity-average molecular weight ($M_v$) was obtained in accordance with the following equation:

$$[\eta] = 1.23 \times 10^{-5} M_v^{0.83}$$

The results are shown in Table 1.

Example 2

The same procedures as those conducted in Example 1 were conducted using an autoclave which was made of SUS 304, had an inner volume of 100 ml, was equipped with a stirrer, and had been treated as shown in Table 1 at the part which would be in contact with the reaction mixture. The results are shown in Table 1.

Example 3 and Comparative Examples 1 to 3

The same procedures as those conducted in Example 1 were conducted using an autoclave which was made of SUS 316, had an inner volume of 100 ml, was equipped with a stirrer, and had been treated as shown in Table 1 at the part which would be in contact with the reaction mixture. The results are shown in Table 1.

Table 1

| | treatment | material | $M_v$* | YI |
|---|---|---|---|---|
| Example 1 | After the same treatment as that of Comparative Example 1, treated by heating at 420°C for 1 hour | SUS316 | 21,000 | 3.1 |
| Example 2 | After the same treatment as that of Comparative Example 2, treated by heating at 420°C for 1 hour | SUS 304 | 20,500 | 2.9 |
| Example 3 | After the same treatment as that of Comparative Example 3, treated by heating at 420°C for 1 hour | SUS 316 | 22,200 | 2.4 |
| Comparative Example 1 | polished by buffing (surface roughness**: 3.2 S) | SUS 316 | 4,800 | 7.6 |
| Comparative Example 2 | treated by washing with an acid: 1.5N $HNO_3$ solution at 80°C for 24 hours | SUS 316 | 4,700 | 5.0 |
| Comparative Example 3 | treated by electropolishing: mixed solution of phosphoric acid and chromic anhydride | SUS 316 | 7,700 | 4.7 |

* Viscosity-average molecular weight

** Measured in accordance with the method of Japanese Industrial Standard B0601-1970

Example 4

Into an autoclave which was made of SUS 316, had an inner volume of 100 ml, was equipped with a stirrer, and had been treated as shown in Table 2 at the part which would be in contact with the reaction mixture (a liquid), 22.8 g (0.1 mol) of bisphenol A, 23.5 g (0.11 mol) of diphenyl carbonate, $2.5 \times 10^{-4}$ mol of high purity tetramethylammonium hydroxide (a product of NIPPON TOKUSHU KAGAKU Co., Ltd.), and $2.5 \times 10^{-6}$ mol of calcium acetate were placed, and the autoclave was purged with nitrogen 5 times.

The obtained mixture was heated to 180°C, and the reaction was allowed to proceed in an argon atmosphere for 30 minutes. Then, the temperature was increased to 210°C, and the reaction was allowed to proceed for 30 minutes

while the pressure was gradually decreased to 100 mmHg. Subsequently, the temperature was increased to 240°C, and the reaction was allowed to proceed while the pressure was gradually decreased to 10 mmHg. The reaction was allowed to proceed further for 30 minutes after the temperature was increased to 270°C and the pressure was decreased to 2 mmHg. The reaction was allowed to proceed for additional 30 minutes at the pressure of 0.3 mmHg and then finished.

A viscous transparent condensate was taken out from the autoclave.

The obtained polycarbonate was molded by a press at 280°C, and YI of this product was measured by using a color meter (a product of SUGA SHIKENKI Co., Ltd.; SM-3) in accordance with the method of Japanese Industrial Standard K7103-77. The viscosity-average molecular weight ($M_v$) of this polycarbonate was measured in accordance with the same method as that used in Example 1. The results are shown in Table 2.

Example 5

The same procedures as those conducted in Example 4 were conducted using an autoclave which was made of SUS 304, had an inner volume of 100 ml, was equipped with a stirrer, and had been treated as shown in Table 2 at the part which would be in contact with the reaction mixture. The results are shown in Table 2.

Example 6 and Comparative Examples 4 to 7

The same procedures as those conducted in Example 4 were conducted using an autoclave which was made of SUS 316, had an inner volume of 100 ml, was equipped with a stirrer, and had been treated as shown in Table 2 at the part which would be in contact with the reaction mixture. The results are shown in Table 2.

Table 2

| | treatment | material | $M_v$* | YI |
|---|---|---|---|---|
| Example 4 | treated by washing with benzaldehyde at 150°C for 2 hours | SUS 316 | 20,800 | 2.4 |
| Example 5 | treated by washing with benzoic acid at 150°C for 2 hours | SUS 304 | 17,200 | 2.7 |
| Example 6 | treated by washing with 2,4-pentanedione at 135°C for 2 hours | SUS 316 | 17,800 | 2.2 |
| Comparative Example 4 | polished by buffing (surface roughness**: 3.2 S) | SUS 316 | 4,800 | 6.2 |
| Comparative Example 5 | treated by washing with an acid: 1.5N $HNO_3$ solution at 80°C for 24 hours | SUS 316 | 4,700 | 3.2 |
| Comparative Example 6 | treated by washing with an alkali: 10% by wt. NaOH solution at room temperature for 1 hour | SUS 316 | 9,100 | 4.0 |
| Comparative Example 7 | treated by washing with toluene at 100°C for 4 hours | SUS 316 | 7,700 | 3.8 |

* Viscosity-average molecular weight

** Measured in accordance with the method of Japanese Industrial Standard B0601-1970

Example 7

An autoclave which was made of SUS 310, had an inner volume of 100 ml, and was equipped with a stirrer was washed with water and dried. Then, the autoclave was filled with 1-heptanol and heated while being stirred. When the temperature reached 175°C, the autoclave was kept at this temperature for 1 hour. The autoclave was then opened and, after the content was removed, dried with an argon stream while the autoclave was allowed to cool down.

A polycarbonate was produced by using this autoclave in accordance with the same procedures as those conducted in Example 1. The obtained polycarbonate was molded by a press at 280°C, and the condition of the product was examined by visual observation. YI of this product was measured by using a color meter (a product of SUGA SHIKENKI Co., Ltd.; SM-3) in accordance with the method of Japanese Industrial Standard K7103-77. The viscosity-average molecular weight ($M_v$) of this polycarbonate was measured in accordance with the same method as that used in Example 1. The results are shown in Table 3.

Examples 8 to 11

The same procedures as those conducted in Example 7 were conducted using an autoclave which was made of SUS 316, had an inner volume of 100 ml, was equipped with a stirrer, and had been treated as shown in Table 3 in accordance with the same procedures as those conducted in Example 7. The results are shown in Table 3.

Comparative Examples 8 to 11

The same procedures as those conducted in Example 7 were conducted using an autoclave which was made of SUS 316, had an inner volume of 100 ml, was equipped with a stirrer, and had been treated as shown in Table 3 at the part which would be in contact with the reaction mixture in accordance with the same procedures as those conducted in Example 7. The results are shown in Table 3. The color tone of the obtained polymer was evaluated by visual observation. The results obtained in Comparative Example 1 are shown together for reference (the color tone of the polymer was evaluated by visual observation.)

Table 3

| | treatment* | material | $M_v$** | YI |
|---|---|---|---|---|
| Example 7 | treated by washing with 1-heptanol at 175°C for 1 hour | SUS 310 | 20,500 | 2.5 (colorless) |
| Example 8 | treated by washing with benzyl alcohol at 150°C for 1 hour | SUS 316 | 20,000 | 2.6 (colorless) |
| Example 9 | treated by washing with 1-nonanol at 200°C for 1 hour | SUS 316 | 20,300 | 2.5 (colorless) |
| Example 10 | treated by washing with 1-tetradecanol at 260°C for 1 hour | SUS 316 | 20,000 | 2.2 (colorless) |
| Example 11 | treated by washing with 1-dodecanol/n-dodecane (1/1 by wt) at 220°C for 1 hour | SUS 316 | 20,100 | 2.5 (colorless) |
| Comparative Example 8 | treated by washing with an acid: 1.5 N $HNO_3$ solution at 80°C for 14 hours | SUS 316 | 4,700 | (light reddish orange) |
| Comparative Example 9 | treated by washing with an alkali: 10% by wt. NaOH solution at room temperature for 1 hour | SUS 316 | 9,100 | (light reddish orange) |
| Comparative Example 10 | treated by washing with toluene at 100°C for 4 hours, repeated 5 times | SUS 316 | 5,000 | (light reddish orange) |
| Comparative Example 11 | treated by washing with phenol at 150°C for 5 hours, repeated 8 times | SUS 316 | 20,600 | (light orange) |
| Comparative Example 1 | polished by buffing (surface roughness: 3.2 S) | SUS 316 | 4,800 | (light reddish orange) |

* Solvents for washing: all conventional industrial solvents
** Viscosity-average molecular weight

Example 12

A thin plate (10 mm × 10 mm × 0.25 mm) of SUS 316 was used as a test piece and treated by heating in an electric oven at the surface temperature of 450°C for 1 hour.

The surface of the treated test piece was examined by the XPS analysis, and the ratio of intensities of peaks $D_2/D_1$ in the obtained spectrum was obtained. In more detail, the ratio of $D_2/D_1$ was obtained from the intensity of the smallest peak $D_1$ in the range of 529.5 to 530.5 eV and the intensity of the largest peak $D_2$ in the range of 531.0 to 532.0 eV in the obtained spectrum and was found to be 0.55. The intensity of a peak was obtained as the height of the peak from the base line on the chart of the spectrum. Figure 1 shows the chart of the spectrum obtained by the XPS analysis of the surface. The results are shown in Table 4.

A test piece (5 mm × 300 mm × 0.25 mm) of SUS 316 which had been treated on the surface under the same condition as that described above was attached to a blade of a stirrer of an autoclave which was made of nickel, had an inner volume of 100 ml, and was equipped with the stirrer. Into the autoclave, 22.8 g (0.1 mol) of bisphenol A, 23.5 g (0.11 mol) of diphenyl carbonate, $2.5 \times 10^{-5}$ mol of high purity tetramethylammonium hydroxide (a product of NIPPON TOKUSHU KAGAKU Co., Ltd.), and $1.0 \times 10^{-6}$ mol of tetraphenyl phosphonium tetraphenyl borate (a product of HOKKO KAGAKU KOGYO Co., Ltd.) were placed, and the autoclave was purged with nitrogen 5 times.

The obtained mixture was heated to 180°C, and the reaction was allowed to proceed in an argon atmosphere for 30 minutes. Then, the temperature was increased to 210°C, and the reaction was allowed to proceed while the pressure was gradually decreased to 100 mmHg. Subsequently, the temperature was increased to 240°C, and the reaction was allowed to proceed while the pressure was gradually decreased to 10 mmHg. The reaction was allowed

to proceed further for 30 minutes after the temperature was increased to 270°C and the pressure was decreased to 2 mmHg. The reaction was allowed to proceed for additional 30 minutes at the pressure of 0.3 mmHg and then finished.

A viscous transparent condensate remained in the autoclave. The obtained polymer was molded by a press at 280°C, and YI of this product was measured by using a color meter (a product of SUGA SHIKENKI Co., Ltd.; SM-3) in accordance with the method of Japanese Industrial Standard K7103-77. The viscosity-average molecular weight ($M_v$) of this polycarbonate was measured in accordance with the same method as that used in Example 1. YI was 1.6, and the polymer was colorless and transparent. $M_v$ was 18,400. The results are shown in Table 4.

Examples 13 and 14

Thin plates (10 mm × 10 mm × 0.25 mm) of SUS 316 and SUS 310 were used as test pieces and treated by heating in an electric oven at the surface temperature of 300°C for 1 hour. The surface of the obtained test pieces was examined by the XPS analysis in the same manner as that in Example 12, and $D_2/D_1$ was obtained.

By using test pieces (5 mm × 300 mm × 0.25 mm) of SUS 316 and SUS 310 which had been treated on the surface under the same condition as that described above, a polycarbonate was produced and evaluated in accordance with the same procedures as those conducted in Example 12.

The results are shown in Table 4, and the charts of spectra of the XPS analysis are shown in Figure 2 (Example 13) and Figure 3 (Example 14).

Comparative Examples 12 to 15

A thin plate (10 mm × 10 mm × 0.25 mm) of SUS 316 was used as a test piece and treated under the condition shown in Table 4. The surface of the obtained test piece was examined by the XPS analysis in the same manner as that in Example 12, and $D_2/D_1$ was obtained.

By using a test piece (5 mm × 300 mm × 0.25 mm) of SUS 316 which had been treated on the surface under the same condition as that described above, a polycarbonate was produced and evaluated in accordance with the same procedures as those conducted in Example 12. The results are shown in Table 4, and the charts of spectra of the XPS analysis are shown in Figure 4 (Comparative Example 12), Figure 5 (Comparative Example 13), and Figure 6 (Comparative Example 14). The color tone of the obtained polymer was evaluated by visual observation although molding of the polymer was not possible.

Table 4

| | treatment | material | $M_v$* | YI | $D_2/D_1$ |
|---|---|---|---|---|---|
| Example 12 | treated by heating at 450°C for 1 hour | SUS 316 | 18,400 | 1.6 (colorless, transparent) | 0.55 |
| Example 13 | treated by heating at 300°C for 1 hour | SUS 316 | 16,200 | 1.6 (colorless, transparent) | 0.58 |
| Example 14 | treated by heating at 300°C for 1 hour | SUS 310 | 18,000 | 1.6 (colorless, transparent) | 0.80 |
| Comparative Example 12 | treated by electropolishing | SUS 316 | 4,800 | (light reddish orange) | 3.64 |
| Comparative Example 13 | treated by heating at 150°C for 1 hour | SUS 316 | 7,200 | (light reddish orange) | 1.55 |
| Comparative Example 14 | treated by washing with phenol at 150°C for 2 hours, repeated 4 times | SUS 316 | 13,200 | 3.2 (slight orange) | 2.00 |
| Comparative Example 15 | treated by washing with phenol at 150°C for 2 hours, repeated 2 times | SUS316 | 8,600 | (reddish brown) | - |

* Viscosity-average molecular weight

As clearly shown in Table 4, the polycarbonates having sufficient molecular weight and excellent color tone could be obtained in Examples 12 to 14 in which the ratio of intensities $D_2/D_1$ was 1,2 or less. In contrast, the quality of the polycarbonates obtained Comparative Examples was insufficient in all cases. Therefore, it can be understood that the state of the surface which is represented by $D_2/D_1$ has a critical effect on the quality of the obtained polycarbonate.

Example 15

The surface of the test piece of SUS 316 which was treated in Example 12 was examined by the XPS analysis. The wave form of the spectrum was separated into (a) a peak of $M_xO_y$ having the peak top at 530.1±0.2 eV, (b) a peak of MOOH having the peak top at 531.4±0.2 eV, (c) a peak of C=O and C-OH having the peak top at 532.3±0.2, and (d) a peak of $H_2O$ having the peak top at 533.6±0.2 eV in accordance with the method described above. Then, the ratio by area: peak (b)/(peak (a) + peak (b)) was obtained. The curve fitting was conducted in accordance with the method of least squares with reference to a mixed distribution of Gaussian distribution and Lorentz distribution with a half-value width of 1.5 to 1.8 eV. (With respect to peak (d), a half-value width of 1.5 to 2.0 eV was used.) The spectrum was corrected with reference to the peak assigned to C(1s), which was set to 284.6 eV.

The result of the wave form separation of the spectrum obtained by the XPS analysis of the surface is shown in Figure 7. The area of peak (b) relative to the sum of the areas of peak (a) and peak (b) was 20.0 %.

Comparative Example 16

The surface of the test piece of SUS 316 which was treated by electropolishing in Comparative Example 12, was examined by the XPS analysis in accordance with the same procedures as those conducted in Example 15.

The result of the wave form separation of the spectrum obtained by the XPS analysis of the surface is shown in Figure 8. The area of peak (b) relative to the sum of the areas of peak (a) and peak (b) was 45.9 %.

Comparative Example 17

The surface of the test piece of SUS 316 which was treated by washing with phenol in Comparative Example 14 was examined by the XPS analysis in accordance with the same procedures as those conducted in Example 15.

The result of the wave form separation of the spectrum obtained by the XPS analysis of the surface is shown in Figure 9. The area of peak (b) relative to the sum of the areas of peak (a) and peak (b) was 43.7 %. This result shows that most of the surface was still covered with FeOOH. A peak which is considered to arise from phenol attached to or remaining on the surface is found at 532.4 eV. This can be considered to show that the color tone and the molecular weight are improved to some degree by washing with phenol because some type of phenol layer is formed on the surface of stainless steel.

In the following Reference Examples, the effect of various types of iron oxides on the production of a polycarbonate by transesterification is shown.

Reference Example 1

Into an autoclave which was made of nickel, had an inner volume of 100 ml, and was equipped with a stirrer, 22.8 g (0.1 mol) of bisphenol A, 23.5 g (0.11 mol) of diphenyl carbonate, $2.5 \times 10^{-6}$ mol of high purity tetramethylammonium hydroxide (a product of NIPPON TOKUSHU KAGAKU Co., Ltd.), $1.0 \times 10^{-6}$ mol of tetraphenyl phosphonium tetraphenyl borate (a product of HOKKO KAGAKU KOGYO Co., Ltd.), and FeOOH in an amount of 30 ppm as iron were placed, and the autoclave was purged with nitrogen 5 times.

The obtained mixture was heated to 180°C, and the reaction was allowed to proceed in an argon atmosphere for 30 minutes. Then, the temperature was increased to 210°C, and the reaction was allowed to proceed for 30 minutes while the pressure was gradually decreased to 100 mmHg. Subsequently, the temperature was increased to 240°C, and the reaction was allowed to proceed while the pressure was gradually decreased to 10 mmHg. The reaction was allowed to proceed further for 30 minutes after the temperature was increased to 270°C and the pressure was decreased to 2 mmHg. The reaction was allowed to proceed for additional 30 minutes at the pressure of 0.3 mmHg and then finished.

A viscous transparent condensate remained in the autoclave. This polymer was dissolved in methylene chloride, and after iron oxides were removed by filtration, the viscosity-average molecular weight was measured in accordance with the same method as that conducted in Example 1. The result is shown in Table 5.

Reference Examples 2 to 4

The same procedures as those conducted in Reference Example 1 were conducted except that an iron oxide shown in Table 5 was added in place of FeOOH added in Reference Example 1. The results are shown in Table 5.

Reference Example 5

The same procedures as those conducted in Reference Example 1 were conducted except that FeOOH was

not added. The result is shown in Table 5.

Table 5

| | iron oxide | $M_v$* |
|---|---|---|
| Reference Example 1 | FeOOH | 6,900 |
| Reference Example 2 | $Fe_2O_3$ | 17,400 |
| Reference Example 3 | $Fe_3O_4$ | 21,100 |
| Reference Example 4 | FeO | 24,900 |
| Reference Example 5 | none | 19,200 |

* Viscosity-average molecular weight

As clearly shown in Table 5, it is understood that the increase in the molecular weight of a polycarbonate is markedly suppressed by the presence of FeOOH in comparison with the presence of other iron oxides.

INDUSTRIAL APPLICABILITY

In accordance with the present invention, in the production of a polycarbonate by transesterification, a high molecular weight polycarbonate having an excellent color tone can easily be obtained by transesterification even when an apparatus made of inexpensive stainless steel is used because the surface of the part of the apparatus which is in contact with a liquid has been treated as described above.

## Claims

1. A process for producing a polycarbonate by transesterification **characterized by** using a reactor made of stainless steel which has been treated by polishing by buffing or electropolishing or by washing with an acid, and then treated by heating at a temperature of 400 to 500°C for 10 minutes or more at least at the part which is in contact with reactants.

2. A process for producing a polycarbonate by transesterification **characterized by** using a reactor made of stainless steel which has been treated, at least at the part which is in contact with reactants, by washing at a temperature of 100°C or higher for 1 hour or more with a compound containing a carbonyl group represented by the general formula (I):

$$R^1 - CO - R^2 \qquad (I)$$

wherein one of $R^1$ and $R^2$ represents a hydrogen atom, a hydroxyl group, an alkyl group having 1 to 20 carbon atoms containing a carbonyl group, or an aryl group containing a carbonyl group, and the other of $R^1$ and $R^2$ represents an alkyl group or an aryl group.

3. A process according to claim 2, wherein the compound is at least one selected from benzaldehyde, benzoic acid and 2,4-pentanedione.

4. A process for producing a polycarbonate by transesterification **characterized by** using a reactor made of stainless steel which has been treated, at least at the part which is in contact with reactants, by washing at a temperature of 100°C or higher for 1 hour or more with a compound containing a hydroxyl group represented by the general formula (II):

$$R^3 - A - OH \qquad (II)$$

wherein $R^3$ represents a hydrogen atom, an alkyl group having 2 to 20 carbon atoms or an aryl group, and A represents an alkylene group having 1 to 10 carbon atoms or an alkenylene group having 2 to 10 carbon atoms.

5. A process according to claim 4, wherein the compound is at least one selected from 1-hexanol, 1-heptanol, 2-octanol, 1-nonanol, 1-dodecanol, 1-tetradecanol and benzyl alcohol.

6. A process for treating the surface of an apparatus for producing a polycarbonate by transesterification which is made of stainless steel at least at the part which is in contact with reactants, which process comprises treating the surface of the part of the apparatus which is in contact with reactants by heating in an ordinary atmosphere, wherein the temperature of the heated surface is adjusted to 300 to 600°C for about 0.5 to 2 hours so that a spectrum obtained by XPS analysis of the surface of the part which is in contact with reactants shows a $D_2/D_1$ of 1.2 or smaller, $D_1$ being an intensity of the smallest peak in a range of 529.5 to 530.5 eV, and $D_2$ being an intensity of the largest peak in a range of 531.0 to 532.0 eV.

7. A process for treating the surface of an apparatus for producing a polycarbonate by transesterification which is made of stainless steel at least at a part which is in contact with reactants, which process comprises treating the surface of the part of the apparatus which is in contact with reactants by heating in an ordinary atmosphere, wherein the temperature of the heated surface is adjusted to 300 to 600°C for about 0.5 to 2 hours, so that the wave form separation of the XPS spectrum of the surface of the part which is in contact with reactants shows that the ratio of the intensity of MOOH peak / (the sum of the intensities of MxOy peak and MOOH peak) is 0.3 or less (M = Fe, Cr, Ni).

8. An apparatus for producing a polycarbonate by transesterification which is made of stainless steel at least at the part which is in contact with reactants, and is treated by heating its surface which is in contact with reactants in an ordinary atmosphere, wherein the temperature of the heated surface is adjusted to 300 to 600°C for about 0.5 to 2 hours, so that a spectrum obtained by XPS (X-ray photoelectron spectroscopy) analysis of the surface of the part which is in contact with the reactants shows a $D_2/D_1$ of 1.2 or smaller, $D_1$ being the intensity of the smallest peak in a range of 529.5 to 530.5 eV, and $D_2$ being the intensity of the largest peak in a range of 531.0 to 532.0 eV.

9. An apparatus for producing a polycarbonate by transesterification which is made of stainless steel at least at the part which is in contact with reactants, and is treated by heating its surface which is in contact with reactants in an ordinary atmosphere, wherein the temperature of the heated surface is adjusted to 300 to 600°C for about 0.5 to 2 hours, so that the wave form separation of the XPS spectrum of the surface of the part which is in contact with reactants shows that the ratio of the intensity of MOOH peak / (the sum of the intensities of $M_xO_y$ peak and MOOH peak) is 0.3 or less (M = Fe, Cr, Ni).

## Patentansprüche

1. Verfahren zur Herstellung eines Polycarbonats durch Umesterung, **dadurch** charakterisiert, dass ein Reaktor aus rostfreiem Stahl verwendet wird, der mindestens in dem Bereich, der in Kontakt mit Reagenzien steht, durch Polieren durch Schwabbeln (buffing) oder Elekfropolieren oder durch Waschen mit einer Säure und dann durch Erwärmen auf eine Temperatur von 400 bis 500°C während 10 Minuten oder mehr behandelt wurde.

2. Verfahren zur Herstellung eines Polycarbonats durch Umesterung, **dadurch** charakterisiert, dass ein Reaktor aus rostfreiem Stahl verwendet wird, der mindestens in dem Bereich, der in Kontakt mit Reagenzien steht, behandelt wurde durch Waschen bei einer Temperatur von 100°C oder höher während einer Stunde oder mehr mit einer eine Carbonylgruppe enthaltenden Verbindung, die durch die allgemeine Formel (I) dargestellt wird:

$$R^1 - CO - R^2 \qquad (I)$$

wobei einer von $R^1$ und $R^2$ ein Wasserstoffatom, eine Hydroxylgruppe, eine Alkylgruppe mit 1 bis 20 Kohlenstoffatomen, die eine Carbonylgruppe enthält, oder eine Arylgruppe, die eine Carbonylgruppe enthält darstellt, und der andere von $R^1$ und $R^2$ eine Alkylgruppe oder eine Arylgruppe darstellt.

3. Verfahren nach Anspruch 2, wobei die Verbindung mindestens eine ist, die ausgewählt wird aus Benzaldehyd, Benzoesäure und 2,4-Pentandion.

4. Verfahren zur Herstellung eines Polycarbonats durch Umesterung, **dadurch** charakterisiert, dass ein Reaktor aus rostfreiem Stahl verwendet wird, der, mindestens in dem Bereich, der in Kontakt mit Reagenzien steht, behandelt wurde durch Waschen bei einer Temperatur von 100°C oder höher während einer Stunde oder mehr mit einer eine Hydroxylgruppe enthaltenden Verbindung, die durch die allgemeine Formel (II) dargestellt wird:

$$R^3\text{-A-OH} \qquad (II)$$

wobei $R^3$ ein Wasserstoffatom, eine Alkylgruppe mit 2 bis 20 Kohlenstoffatomen oder eine Arylgruppe darstellt, und A eine Alkylengruppe, die 1 bis 10 Kohlenstoffatome aufweist, oder eine Alkenylengruppe, die 2 bis 10 Kohlenstoffatome aufweist, darstellt.

**5.** Verfahren nach Anspruch 4, wobei die Verbindung mindestens eine ist, die ausgewählt wird aus 1-Hexanol, 1-Heptanol, 2-Octanol, 1-Nonanol, 1-Dodecanol, 1-Tetradecanol und Benzylalkohol.

**6.** Verfahren zur Behandlung der Oberfläche einer Apparatur zur Herstellung eines Polycarbonats durch Umesterung, welche aus rostfreiem Stahl hergestellt ist, mindestens in dem Bereich, der in Kontakt mit Reagenzien steht, wobei das Verfahren Behandeln der Oberfläche des Bereichs der Apparatur, der in Kontakt mit Reagenzien steht, durch Erwärmen in einer normalen Atmosphäre umfasst, wobei die Temperatur der erwärmten Oberfläche während 0,5 bis 2 Stunden auf 300 bis 600°C eingestellt wird, so dass das durch XPS-Analyse der Oberfläche des Bereichs, der mit Reagenzien in Kontakt steht, erhaltene Spektrum $D_2/D_1$ von 1,2 oder kleiner zeigt, wobei $D_1$ die Intensität des kleinsten Peaks im Bereich von 529,5 bis 530,5 eV ist, und $D_2$ die Intensität des größten Peaks in einem Bereich von 531,0 bis 532,0 eV ist.

**7.** Verfahren zur Behandlung der Oberfläche einer Apparatur zur Herstellung eines Polycarbonats durch Umesterung, welche aus rostfreiem Stahl hergestellt ist, in mindestens einem Bereich, der in Kontakt mit Reagenzien steht, wobei das Verfahren Behandlung der Oberfläche des Bereichs der Apparatur, die in Kontakt mit Reagenzien steht, durch Erwärmen in einer normalen Atmosphäre umfasst, wobei die Temperatur der erwärmten Oberfläche während 0,5 bis 2 Stunden auf 300 bis 600°C eingestellt wird, so dass die Wellenformtrennung des XPS-Spektrums der Oberfläche des Bereichs, der in Kontakt mit Reagenzien steht, zeigt, dass das Verhältnis der Intensität des MOOH-Peaks/(Summe der Intensitäten des MxOy-Peaks und MOOH-Peaks) 0,3 oder weniger ist (M = Fe, Cr, Ni).

**8.** Apparatur zur Herstellung eines Polycarbonats durch Umesterung, welche aus rostfreiem Stahl mindestens in dem Bereich besteht, der in Kontakt mit Reagenzien steht, und durch Erwärmen der Oberfläche, die in Kontakt mit Reagenzien steht, in einer normalen Atmosphäre behandelt wird, wobei die Temperatur der erwärmten Oberfläche auf 300 bis 600°C während etwa 0,5 bis 2 Stunden eingestellt wird, so dass ein durch XPS (Röntgen-Photoelektronen-Spektroskopie)-Analyse erhaltenes Spektrum der Oberfläche des Bereichs, der mit Reagenzien in Kontakt steht, $D_2/D_1$ von 1,2 oder kleiner zeigt, wobei $D_1$ die Intensität des kleinsten Peaks im Bereich von 529,5 bis 530,5 eV ist, und $D_2$ die Intensität des größten Peaks in einem Bereich von 531 ,0 bis 532,0 eV ist.

**9.** Apparatur zur Herstellung eines Polycarbonats durch Umesterung, welche mindestens in dem Bereich, der in Kontakt mit Reagenzien steht, aus rostfreiem Stahl hergestellt ist und durch Erwärmen der Oberfläche, die in Kontakt mit Reagenzien steht, in einer normalen Atmosphäre behandelt wird, wobei die Temperatur der erwärmten Oberfläche während etwa 0,5 bis 2 Stunden auf 300 bis 600°C eingestellt wird, so dass die Wellenformtrennung des XPS-Spektrums der Oberfläche des Bereichs, der in Kontakt mit Reagenzien steht, zeigt, dass das Verhältnis der Intensität des MOOH-Peaks/(Summe der Intensitäten von MxOy-Peak und MOOH-Peak) 0,3 oder weniger ist (M = Fe, Cr, Ni).

## Revendications

**1.** Procédé pour la production d'un polycarbonate par transestérification, **caractérisé par le fait que** l'on utilise un réacteur constitué d'acier inoxydable qui a été traité par polissage, par meulage ou par polissage électrolytique ou encore par lavage avec un acide, avant de le traiter par chauffage à une température de 400 à 500 °C pendant 10 minutes ou plus, au moins dans la partie qui entre en contact avec des réactifs.

**2.** Procédé pour la production d'un polycarbonate par transestérification, **caractérisé par le fait que** l'on utilise un réacteur constitué d'acier inoxydable qui a été traité, au moins dans la partie qui entre en contact avec des réactifs, par lavage à une température de 100 °C ou plus pendant 1 heure ou plus avec un composé contenant un groupe carbonyle répondant à la formule générale (I) .

$$R^1 - CO - R^2 \qquad (I)$$

dans laquelle un des radicaux $R^1$ et $R^2$ représente un atome d'hydrogène, un groupe hydroxyle, un groupe alkyle contenant de 1 à 20 atomes de carbone contenant un groupe carbonyle, ou un groupe aryle contenant un groupe carbonyle, l'autre radical parmi les radicaux $R^1$ et $R^2$ représentant un groupe alkyle ou un groupe aryle.

3. Procédé selon la revendication 2, dans lequel le composé représente au moins un membre choisi parmi le groupe comprenant le benzaldéhyde, l'acide benzoïque et la 2,4-pentanedione.

4. Procédé pour la production d'un polycarbonate par transestérification, **caractérisé par le fait que** l'on utilise un réacteur constitué d'acier inoxydable qui a été traité, au moins dans la partie qui entre en contact avec des réactifs, par lavage à une température de 100 °C ou plus pendant 1 heure ou plus avec un composé contenant un groupe hydroxyle répondant à la formule générale (II) :

$$R^3 - A - OH \qquad (II)$$

dans laquelle $R^3$ représente un atome d'hydrogène, un groupe alkyle contenant de 2 à 20 atomes de carbone ou un groupe aryle, et A représente un groupe alkylène contenant de 1 à 10 atomes de carbone ou un groupe alcénylène contenant de 2 à 10 atomes de carbone.

5. Procédé selon la revendication 4, dans lequel le composé représente au moins un membre choisi parmi le groupe comprenant le 1-hexanol, le 1-heptanol, le 2-octanol, le 1-nonanol, le 1-dodécanol, le 1-tétradécanol et l'alcool benzylique.

6. Procédé pour traiter la surface d'un appareil destiné à la production d'un polycarbonate par transestérification, qui est constitué d'acier inoxydable au moins dans la partie qui entre en contact avec des réactifs, ledit procédé comprenant le fait de traiter la surface de la partie de l'appareil qui entre en contact avec des réactifs en la chauffant sous atmosphère ambiante, la température de la surface chauffée étant réglée à une valeur de 300 à 600 °C pendant un laps de temps d'environ 0,5 à 2 heures, de telle sorte qu'un spectre que l'on obtient par analyse. XPS de la surface de la partie qui entre en contact avec des réactifs présente un rapport $D_2/D_1$ de 1,2 ou moins, $D_1$ représentant l'intensité du plus petit pic dans la plage de 529,5 à 530,5 eV et $D_2$ représentant l'intensité du plus grand pic dans la plage de 531,0 à 532,0 eV.

7. Procédé pour traiter la surface d'un appareil destiné à la production d'un polycarbonate par transestérification, qui est constitué d'acier inoxydable au moins dans la partie qui entre en contact avec des réactifs, ledit procédé comprenant le fait de traiter la surface de la partie de l'appareil qui entre en contact avec des réactifs en la chauffant sous atmosphère ambiante, la température de la surface chauffée étant réglée à une valeur de 300 à 600 °C pendant un laps de temps d'environ 0,5 à 2 heures, de telle sorte que la séparation des formes d'ondes du spectre XPS de la surface de la partie qui entre en contact avec des réactifs indique que le rapport de l'intensité du pic MOOH / (la somme des intensités du pic MxOy et du pic MOOH) s'élève à 0,3 ou moins (M = Fe, Cr, Ni).

8. Appareil destiné à la production d'un polycarbonate par transestérification, qui est constitué d'acier inoxydable au moins dans la partie qui entre en contact avec des réactifs et qui est traité en chauffant sa surface qui entre en contact avec des réactifs sous atmosphère ambiante, la température de la surface chauffée étant réglée à une valeur de 300 à 600 °C pendant un laps de temps d'environ 0,5 à 2 heures, de telle sorte qu'un spectre que l'on obtient par analyse XPS (spectroscopie des rayons X par photo-électrons) de la surface de la partie qui entre en contact avec les réactifs présente un rapport $D_2/D_1$ de 1,2 ou moins, $D_1$ représentant l'intensité du plus petit pic dans la plage de 529,5 à 530,5 eV et $D_2$ représentant l'intensité du plus grand pic dans la plage de 531,0 à 532,0 eV.

9. Appareil destiné à la production d'un polycarbonate par transestérification, qui est constitué d'acier inoxydable au moins dans la partie qui entre en contact avec des réactifs et qui est traité en chauffant sa surface qui entre en contact avec des réactifs sous atmosphère ambiante, la température de la surface chauffée étant réglée à une valeur de 300 à 600 °C pendant un laps de temps d'environ 0,5 à 2 heures, de telle sorte que la séparation des formes d'ondes du spectre XPS de la surface de la partie qui entre en contact avec des réactifs indique que le rapport de l'intensité du pic MOOH / (la somme des intensités du pic MxOy et du pic MOOH) s'élève à 0,3 ou moins (M = Fe, Cr, Ni).

Figure 1

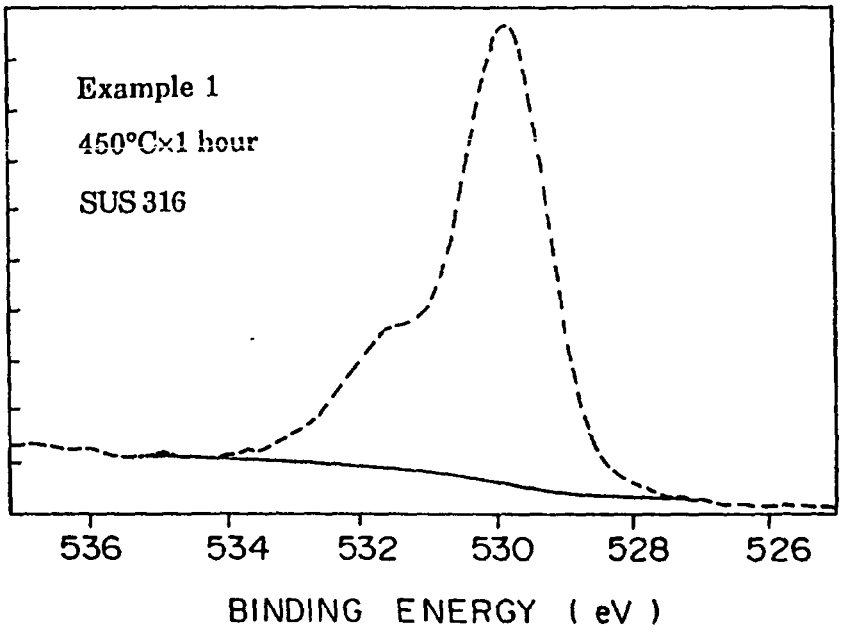


Figure 2

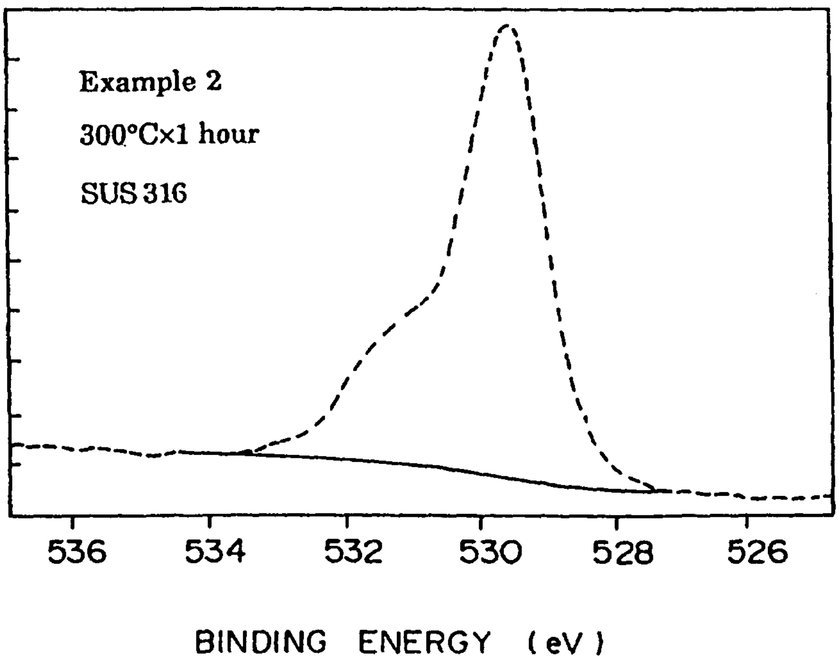

Figure 3

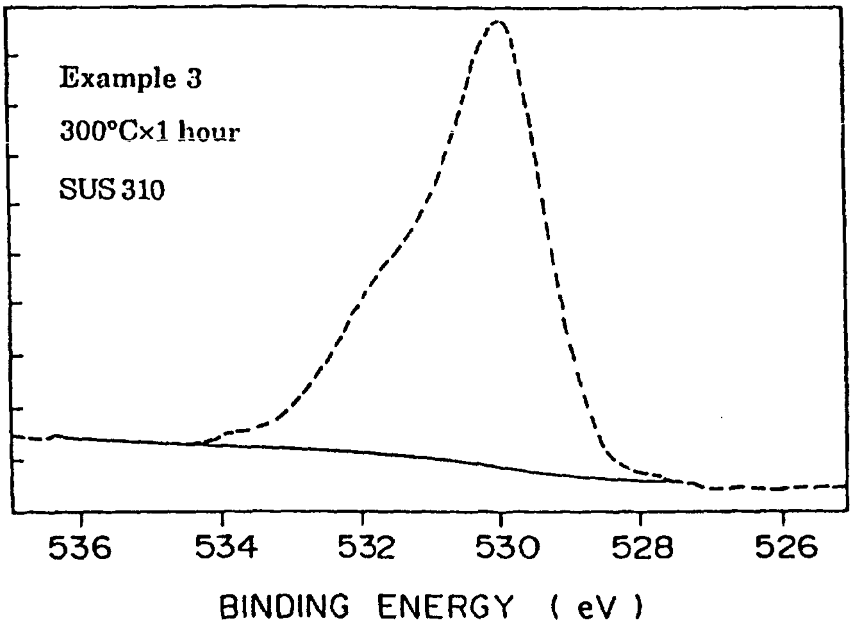


Figure 4

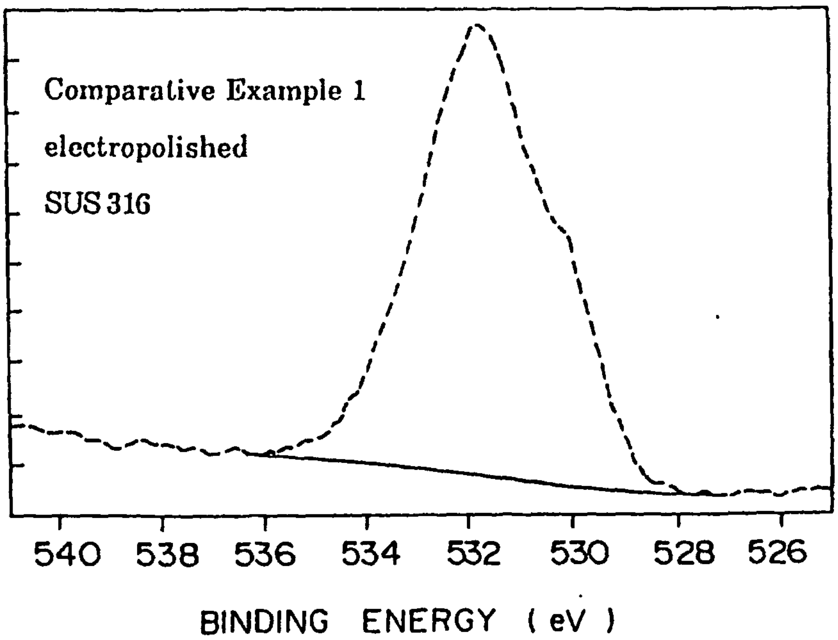

Figure 5

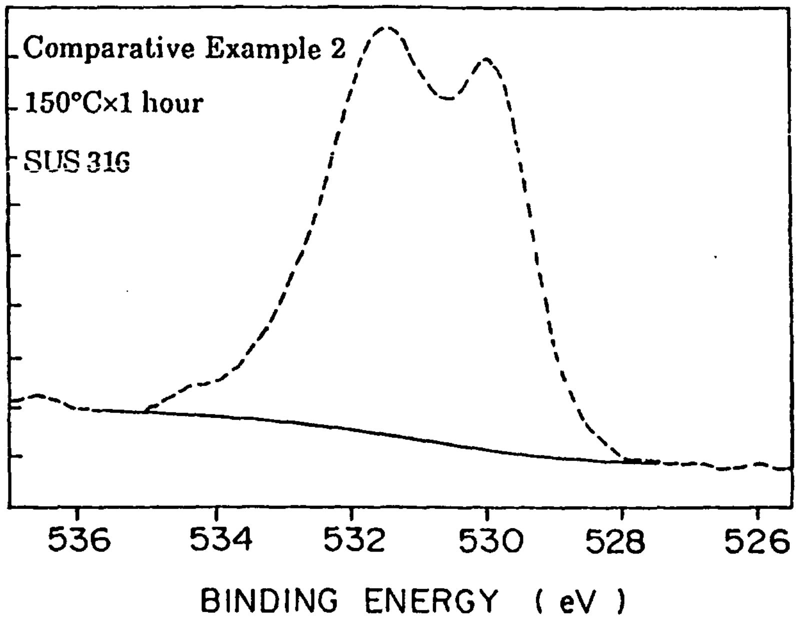


Figure 6

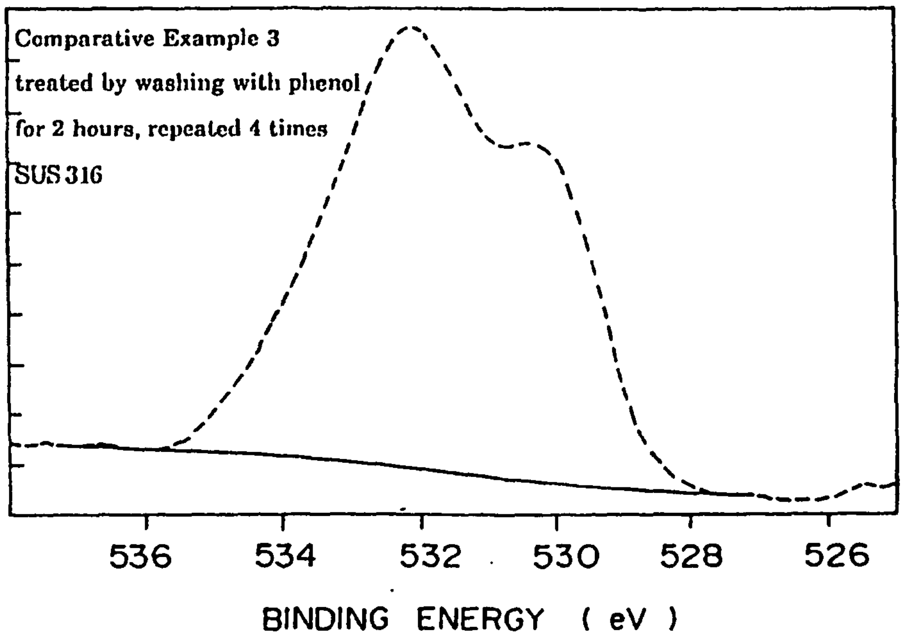

Figure 7

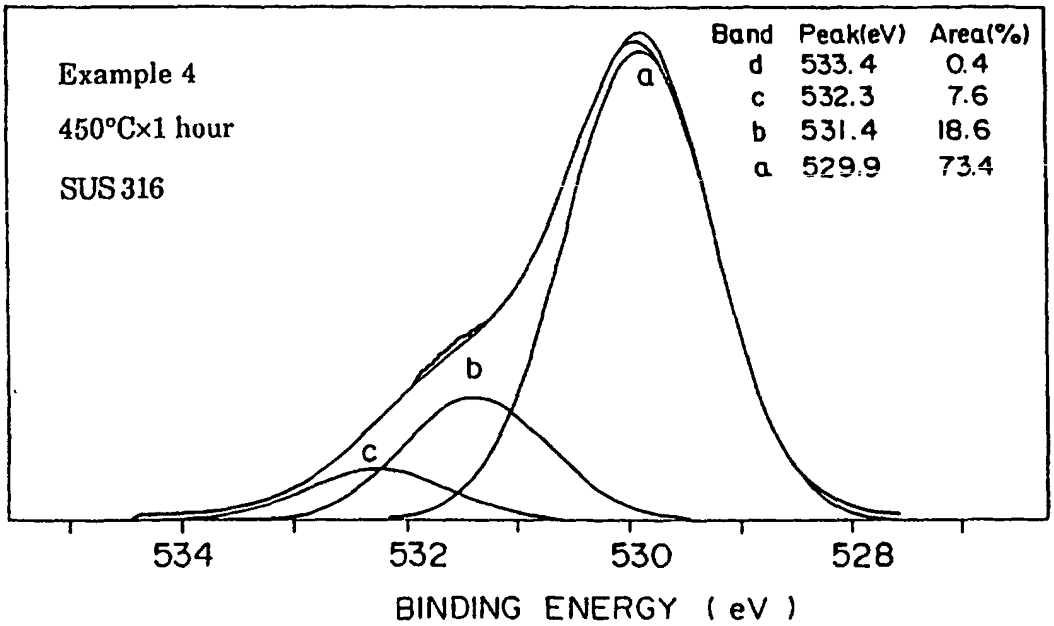


Figure 8

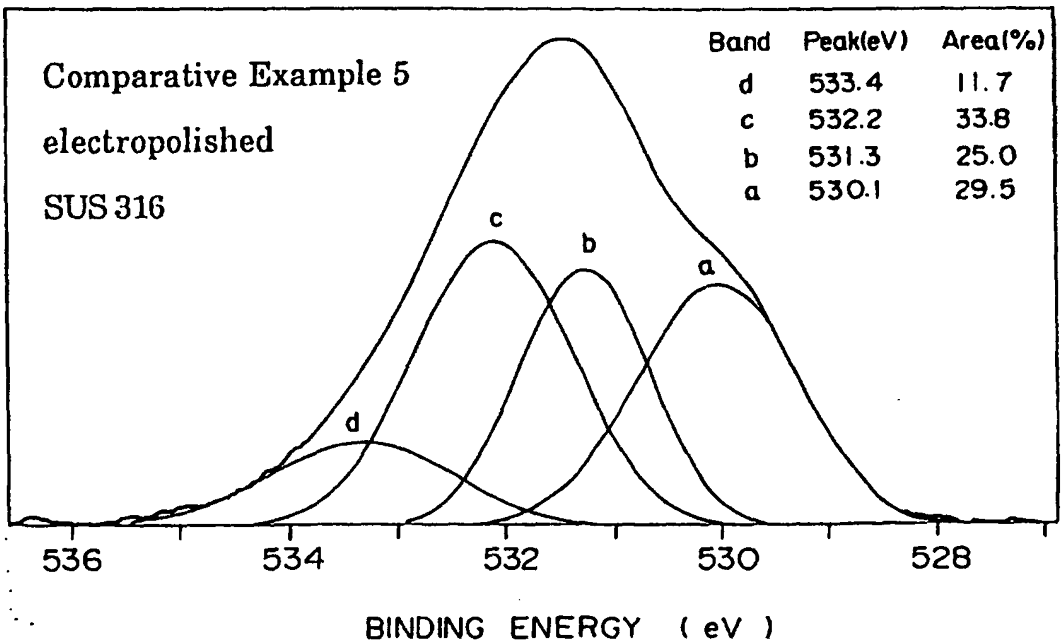

Figure 9

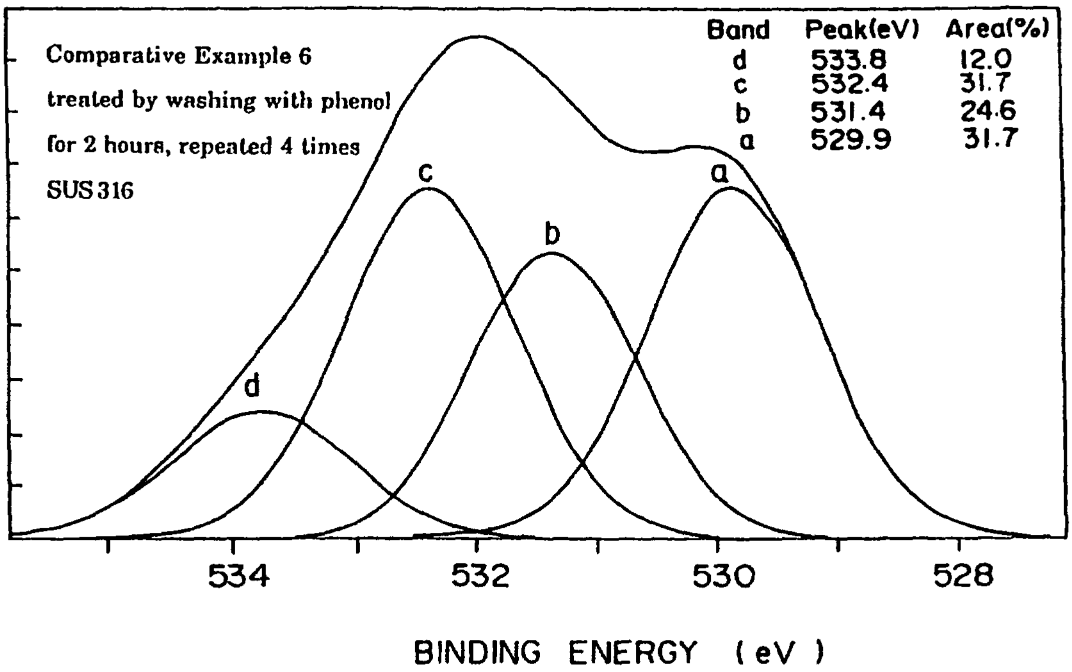
Comparative Example 6
treated by washing with phenol
for 2 hours, repeated 4 times
SUS 316
Band Peak(eV) Area(%)
d 533.8 12.0
c 532.4 31.7
b 531.4 24.6
a 529.9 31.7
a
b
c
d
534
532
530
528
BINDING ENERGY (eV)